# EUROPEAN PATENT SPECIFICATION

(11) **EP 2 518 024 B1**
(45) Date of publication and mention of the grant of the patent: **21.11.2018**
(21) Application number: 10839189.7
(22) Date of filing: 08.12.2010
(51) Int. Cl.: C02F 1/74, B01J 23/42, B01J 23/44, B01J 23/46, B01J 23/745, B01J 23/755, B01J 23/76, B01J 23/80, B01J 23/825, B01J 23/835, B01J 23/84, B01J 23/847, B01J 23/889

(54) **CATALYST FOR TREATMENT OF WASTE WATER, AND METHOD FOR TREATMENT OF WASTE WATER USING THE CATALYST**
KATALYSATOR ZUR ABWASSERVERARBEITUNG SOWIE VERFAHREN ZUR ABWASSERVERARBEITUNG MITHILFE DIESES KATALYSATORS
CATALYSEUR UTILISÉ POUR LE TRAITEMENT DES EAUX USÉES ET PROCÉDÉ DE TRAITEMENT DES EAUX USÉES FAISANT APPEL AUDIT CATALYSEUR

(30) Priority: 22.12.2009 JP 2009290441; 30.03.2010 JP 2010076661; 30.03.2010 JP 2010076662; 10.05.2010 JP 2010108363
(43) Date of publication of application: 31.10.2012
(73) Proprietor: Nippon Shokubai Co., Ltd., Osaka-shi, Osaka 541-0043 (JP)
(72) Inventor: NISHIKAWA, Yohei, Himeji-shi Hyogo 671-1292 (JP); SASAKI, Koya, Himeji-shi Hyogo 671-1292 (JP); ISHII, Tohru, Himeji-shi Hyogo 671-1292 (JP)
(74) Representative: Copsey, Timothy Graham
(86) International application number: PCT/JP2010/072036
(87) International publication number: WO 2011/077955

(56) References cited:
- WO-A1-2008/120588
- WO-A1-2008/120588
- JP-A- 5 138 027
- JP-A- 5 317 716
- JP-A- 5 317 869
- JP-A- 8 276 194
- JP-A- 11 077 069
- JP-A- 2002 126 518
- JP-A- 2002 282 876
- JP-A- 2003 305 482
- JP-A- 2007 268 527
- JP-A- 2008 093 539
- US-A- 5 399 541
- US-A1- 2007 210 010
- WU, J-C. ET AL.: 'Dehydrogenation of ethylbenzene over Ti02-Fe203 and Zr02-Fe203 mixed oxide catalysts' CATALYSIS LETTERS vol. 20, no. 3-4, August 1993, pages 191 - 201, XP008153610

## Description

### Technical Field

The present invention relates to the treatment of waste water. More particularly, the present invention relates to a catalyst used in the treatment of waste water, and a method for treating waste water using the catalyst.

### Background Art

Methods for the treatment of waste water that are conventionally known include biological treatments, combustion treatments, the Zimmerman process, and the like.

As the biological treatments, aerobic treatments such as an activated sludge process and a biofilm process; anaerobic treatments such as a methane fermentation process; and combined treatments of aerobic treatments and anaerobic treatments have been used hitherto. Particularly, aerobic treatments using microorganisms are widely employed as a method for the treatment of waste water. However, in aerobic microbial treatments, since bacteria, algae, protozoans and the like are mutually interacting in a complicated manner, when a waste water containing high concentrations of organic substances or nitrogen compounds is subjected to an aerobic microbial treatment, dilution of the waste water, an adjustment of pH, and the like are necessary in order to provide an environment appropriate for the growth of microorganisms. Therefore, the apparatus or operation thereof is complicated, and since excess sludge is produced, the excess sludge is necessary to be treated as well. Thus, aerobic microbial treatments have a problem that the overall treatment cost is high.

Combustion treatments have a problem that since expenses such as fuel cost incur, the process cost markedly increases if a large amount of waste water is treated. Furthermore, there is a risk that secondary pollution caused by the exhaust gas and the like resulting from combustion may occur.

The Zimmerman process involves treating waste water at high temperature and high pressure in the presence of an oxygen-containing gas. However, the Zimmerman process generally has low treatment efficiency, and also requires secondary treatment facilities.

Particularly, in recent years, a wide variety of pollutants are contained in the waste water to be treated, and also, high level quality of treated water is demanded. Therefore, the conventional technologies such as described above cannot sufficiently deal with such demands.

Thus, for the purpose of obtaining high quality treated water with high waste water treatment efficiency, various waste water treatment methods have been proposed. For example, attention is increasingly paid to a wet oxidation method using a solid catalyst (hereinafter, simply described as "catalytic wet oxidation treatment method"), because high level quality of treated water can be obtained, and the method exhibits excellent economic efficiency. In order to enhance the treatment efficiency and throughput of such a catalytic wet oxidation treatment method, various catalysts have been suggested. For example, catalysts in which noble metals such as palladium and platinum are supported on base materials such as alumina, silica-alumina, silica gel and activated carbon, have been suggested (for example, Patent Literature 1). Furthermore, catalysts comprising copper oxide or nickel oxide have been suggested (for example, Patent Literature 2).

However, particularly with regard to the treatment of waste water containing nitrogen-containing compounds, there has been a problem for long that red tide occurs or musty odor generates, in the sea areas, lakes, swamps, rivers and the like as a result of eutrophication, and this problem is known to be caused by discharging the nutritive salts of nitrogen or the like contained in the waste water to the water areas. For this reason, regulations for effluent in relation to nitrogen have been enforced. However, only by treatments of a conventional activated sludge method and the like, nitrogen-containing compounds cannot be sufficiently removed. Therefore, in many cases, a denitrification process is necessary to be newly provided.

Conventionally, as the method for treating waste water containing nitrogen-containing compounds, biological treatment methods such as an activated sludge treatment method, combustion treatment methods, aggregation treatment methods using anionic polymer aggregating agents, and the like have been employed.

On the other hand, as a method for the treatment of waste water containing nitrogen-containing compounds, a method of wet oxidation using a catalyst has been proposed (for example, Patent Literature 3). This is a method of treating waste water at a temperature of 100°C to 370°C under the pressure conditions that retain liquid phase, in the presence of a particular catalyst, while a gas containing oxygen is supplied. According to this treatment method, the nitrogen-containing compounds in the waste water can be converted to nitrogen gas, water, carbon dioxide gas, inorganic acids, ash, lower molecular weight organic substances and the like, and purification can be achieved.

### Prior Art Literature

### Patent Literature

Patent Literature 1: JP-A-49-44556
Patent Literature 2: JP-A-49-94157
Patent Literature 3: JP-A-2008-93539

### Summary of Invention

### Problem to be solved by the invention

However, in general, the components contained in the waste water are not a single component, and waste water frequently contains scaling materials which are catalyst poisoning materials, in addition to organic compounds, nitrogen compounds and sulfur compounds. Thus, with the catalyst described in Patent Literatures 1 and 2, these components could poison the catalyst surface then it becomes difficult to maintain high treatment performance.

The treatment of nitrogen-containing compounds can be carried out with high efficiency according to the catalytic wet oxidation treatment method described in Patent Literature 3; however, depending on the nature of the waste water, the catalyst may deteriorate, then, it becomes difficult to maintain high purifying properties for a long time. Also, with regard to the catalysts used in the above-described methods, since highly expensive noble metals are used in large amounts, the catalyst cost is high, and it has been economically disadvantageous.

As discussed above, the treatment of nitrogen-containing compounds can be efficiently carried out according to the catalytic wet oxidation treatment method described in Patent Literature 3. However, depending on the treatment conditions or the nature of the waste water, large amounts of nitrate nitrogen and/or nitrite nitrogen are produced during the treatment, in that case, even higher total nitrogen treatment efficiency may be demanded. Particularly, when actual waste water containing nitrogen-containing compounds is treated in a flow system, the total nitrogen concentration in the waste water fluctuates all the time. For example, a high treatment efficiency may also demanded in the case where an oxidizing agent is supplied in a constant amount and a waste water having a low nitrogen concentration is instantaneously supplied. If the treatment of waste water takes a long time, the catalyst may deteriorate, thereby it may become difficult to maintain high purifying performance.

Therefore, the present invention was made in view of such circumstances as described above, and is intended to achieve the following items (i).
(i) An object of the present invention is to provide a catalyst capable of maintaining excellent catalyst activity and durability for a long time when waste water is treated by a wet oxidation treatment, and a method for the wet oxidation treatment of waste water using the catalyst.

### Solution to Problem

The inventors of the present invention conducted a thorough investigation in order to address the problems described above, and as a result, the inventors found that the objects can be achieved by using a catalyst in which particular components are present at the outer surface of the catalyst in an amount equal to or greater than a specific value. Furthermore, the inventors of the present invention also found that in regard to a waste water treatment, when catalyst poisoning materials are included in the waste water, the above-described objects can be achieved by adding sodium and/or potassium in an amount equal to or greater than a specific value, and adjusting the pH value of the waste water. Thus, the inventors finally completed the present invention based on the findings described above.

The invention according to a first aspect is a catalyst for waste water treatment, comprising, as a component A, iron or iron oxide and an oxide of at least one element selected from the group consisting of titanium, silicon, aluminum, zirconium and cerium, and as a component B, at least one element selected from the group consisting of silver, gold, platinum, palladium, rhodium, ruthenium and iridium,
wherein at least 70% by mass of the component B determined by linear analysis with EPMA and calculation on the basis of the area ratio is present within 1000 µm from the outer surface of the oxide of the component A, the average particle size of the component B calculated by measuring the amount of chemisorption by the CO pulse method of a TPD analysis is 0.5 nm to 20 nm, and the solid acid content of the oxide of the component A determined by a temperature programmed desorption method with ammonia adsorption is 0.20 mmol/g or greater.

Preferably, the catalyst for waste water treatment includes 95% to 99.95% by mass of the component A, and 0.05% to 5% by mass of the component B (the sum of the component A and the component B is 100% by mass), and the component A contains 4.95% to 95% by mass of iron as an oxide, and 4.95% to 95% by mass of at least one element selected from the group consisting of titanium, silicon, aluminum, zirconium and cerium, as an oxide (provided that the sum of the oxide of iron and the oxide of the at least one element selected from the group consisting of titanium, silicon, aluminum, zirconium and cerium is 95% to 99.95% by mass with respect to the catalyst). Further, the catalyst for waste water treatment preferably contains the component B in an amount of 0.05% to 0.7% by mass.

### Advantageous Effects of Invention

The catalysts related to the first aspect of the present invention are catalysts capable of stably treating waste water over a long time with high treatment performance. When waste water is treated by a wet oxidation treatment using the solid catalyst, treated water that has been purified to a high level can be obtained.

### Brief Description of Drawings

FIG. 1 is a diagram showing an example of the waste water treatment apparatus used with the catalyst of the present invention.
FIG. 2 is a diagram showing the apparatus used in Example 2-1.
FIG. 3 is a diagram showing a comparison of the treatment performance of the pre-catalysts obtained in Examples 2-5 to 2-19.
FIG. 4 is a diagram showing the apparatus used in Example 3-1 and Example 4-1, which are Examples not according to the present invention.

### Description of Embodiments

The catalyst of the present invention is a catalyst for waste water treatment, having an average particle size of 2mm or greater, comprising, as a component A, iron oxide and a second oxide of at least one element selected from the group consisting of titanium, silicon, aluminum, aluminum, zirconium and cerium, and as a component B, at least one element selected from the group consisting of silver, gold, platinum, palladium, rhodium, ruthenium and iridium,;
wherein the mixing ratio of the iron oxide to the second oxide in component A is 60-95:5-40, by weight;
wherein at least 70% by mass of the component B, determined by linear analysis with EPMA (electron probe microanalysis; using an EPM-810, Shimadzu Corp., with 1µm X-ray beam diameter, accelerating voltage of 20kV, sample current 0.1µm and sample scan speed of 200µm/min) and calculation on the basis of the area ratio, is present within 1000 µm from the outer surface of the oxide of the component A, wherein the average particle size of the component B, calculated by measuring the amount of chemisorption by the CO pulse method of a TPD analysis, is 0.5 nm to 20 nm, and wherein the solid acid content of the oxide of the component A, determined by a temperature programmed desorption method with ammonia adsorption, is 0.20 mmol/g or greater.

Hereinafter, exemplary embodiments of the present invention will be described.

The catalyst desirably contains 95% to 99.95% by mass of the component A, and 0.05% to 5% by mass of the component B (the sum of the component A and the component B is 100% by mass), the content of iron as an oxide in the component A is 4.95% to 95% by mass, and the content of at least one element selected from the group consisting of titanium, silicon, aluminum, zirconium and cerium as an oxide is 4.95% to 95% by mass (provided that the sum of the oxide of iron and the oxide of at least one element selected from the group consisting of titanium, silicon, aluminum, zirconium and cerium is 95% to 99.95% by mass based on the catalyst). It is particularly desirable that the catalyst contain the component B in an amount of 0.05% to 0.7% by mass. A catalyst containing such a component B exhibits a particularly excellent activity on the wet oxidation of waste water.

The component B or the raw material of the component B is not particularly limited as long as it is selected from the components described above, but the component B is preferably a water-soluble compound, and more preferably an inorganic compound. The component B may be an emulsion type compound, or a compound in the form of slurry or colloid, and a suitable compound may be used appropriately in accordance with the method for producing the catalyst or the type of the component A. In the case of using platinum as the component B, for example, platinum, platinum black, platinum oxide, platinous chloride, platinic chloride, chloroplatinic acid, sodium chloroplatinate, platinum potassium nitrite, dinitrodiammineplatinum, hexaammineplatinum, hexahydroxyplatinic acid, cis-dichlorodiammineplatinum, tetraammineplatinum dichloride, tetraammineplatinum hydroxide, hexaammineplatinum hydroxide, and potassium tetrachloroplatinate can be used. Furthermore, in the case of using palladium as the component B, for example, palladium, palladium chloride, palladium nitrate, dinitrodiamminepalladium, dichlorodiamminepalladium, tetraamminepalladium dichloride, dis-dichlorodiamminepalladium, palladium black, palladium oxide, and tetraamminepalladium hydroxide can be used. In the case of using ruthenium as the component B, for example, ruthenium, ruthenium chloride, ruthenium nitrate, hexacarbonyl-µ-chlorodichlorodiruthenium, ruthenium oxide, dodecacarbonyltriruthenium, ruthenium acetate, potassium ruthenate, potassium hexachlororuthenate, hexaammineruthenium trichloride, and perruthenic acid can be used. Also, in the case of using gold as the component B, for example, gold, chloroauric acid, gold potassium cyanide, and potassium cyanoaurate can be used. In the case of using silver as the component B, for example, silver, silver nitrate, and silver chloride can be used. In the case of using rhodium as the component B, for example, rhodium; halides such as rhodium chloride; inorganic salts of rhodium, such as nitrate, sulfate, hexaammine salt and hexacyanate; carboxylates of rhodium, such as acetate; and hydroxide, alkoxide and oxide of rhodium can be used. Also, in the case of using iridium as the component B, for example, iridium, iridium chloride, iridium nitrate, iridium sulfate, and trichlorohexaammineiridium can be used.

According to the present invention, at least 70% by mass of the component B is present at a position located within 1000 µm from the surface of the oxide comprising the component A, the average particle size of the component B is 0.5 nm to 20 nm, and the solid acid content of the oxide comprising the component A is 0.20 mmol/g or greater.

The catalyst of the present invention contains iron as the component A. Here, the component A can function as a base material to support the component B. The form of iron as the component A is not particularly limited, and may be any form such as iron (Fe), iron oxide (Fe₂O₃) and the like. However, it is particularly preferable that the catalyst contains at least iron oxide (Fe₂O₃) as the component A. The catalyst of the present invention further contains, as the component A, at least one oxide selected from the group consisting of an oxide of titanium (TiO₂), an oxide of silicon (SiO₂), an oxide of aluminum (Al₂O₃), an oxide of zirconium (ZrO₂), and an oxide of cerium (CeO₂) (hereinafter, also referred to as "other oxide"). That is, a preferred combination of the component A is a combination of iron oxide and any of the oxides described above, and examples thereof include Fe₂O₃-TiO₂, Fe₂O₃-Al₂O₃, Fe₂O₃-CeO₂, Fe₂O₃-SiO₂, Fe₂O₃-ZrO₂, Fe₂O₃-TiO₂-Al₂O₃, Fe₂O₃-TiO₂-CeO₂, Fe₂O₃-TiO₂-SiO₂, Fe₂O₃-TiO₂-ZrO₂, Fe₂O₃-Al₂O₃-CeO₂, Fe₂O₃-Al₂O₃-SiO₂, Fe₂O₃-Al₂O₃-ZrO₂, Fe₂O₃-CeO₂-SiO₂, Fe₂O₃-CeO₂-ZrO₂, Fe₂O₃-SiO₂-ZrO₂, Fe₂O₃-TiO₂-CeO₂-ZrO₂, and Fe₂O₃-Al₂O₃-CeO₂-ZrO₂. However, the combination of the component A of the present invention is not intended to be limited to these. Combinations of Fe₂O₃-TiO₂, Fe₂O₃-Al₂O₃, Fe₂O₃-CeO₂, and Fe₂O₃-SiO₂ are more preferred.

With regard to the component A, the mixing ratio (in terms of oxide) of iron and the other oxide is 60 - 95:40 - 5 (mass ratio), and more preferably 70 - 90 : 30 - 10 (mass ratio) . When the mixing ratio is within the range, the catalyst can exhibit excellent waste water treatment efficiency.

In order to exhibit the effects of the active components described above, 70% by mass or more of the component B contained in the catalyst is made to be present in the surface layer which occupies from the outer surface of the oxide of the component A to a depth of 1000 µm. Thereby, the reaction at the catalyst surface is accelerated to a large extent, pollutant materials in the waste water can be efficiently treated.

The proportion (% by mass) of the active component present in the surface layer of the catalyst (oxide of the component
A) extending from the base material surface to a depth of 1000 µm, relative to the total amount of the component B contained in the catalyst, is determined by: with the catalyst cross-section, a linear analysis is performed for the amount of the active component of the catalyst surface layer section by EPMA (electron probe microanalysis), and the proportion of the active component in the region from the catalyst surface to a depth of 1000 µm with respect to that in the total distribution is calculated on the basis of the area ratio. In the method described above, the proportion (% by mass) of the component B present in the surface layer section extending from the outer surface of the oxide of the component A to a depth of 1000 µm is determined. However, the proportion (% by mass) of the component B present in the surface layer section extending from the outer surface of the oxide of the component A to a different depth, can be measured by using the same operation as the above-described method, except for changing the depth to a intended depth. For example, to determine the proportion (% by mass) of the component B present in the surface layer section from the outer surface of the component A oxide to 300 µm depth, a linear analysis can be performed, with the catalyst cross-section, for the amount of the active components of the catalyst surface layer section by EPMA (electron probe microanalysis), and the proportion of the component amount in the region extending from the catalyst surface to a depth of 300 µm with respect to that in the total distribution can be calculated on the basis of the area ratio.

As described above, it is recommended that 70% by mass or more of the total amount of the component B detected by EPMA be present in the surface layer section extending from the outer surface of the catalyst to a depth of 1000 µm. However, it is preferable that the 70% by mass or more of the component B is present in the region extending within 800 µm (0 µm to 800 mm from the surface), more preferably within 500 µm (0 µm to 500 µm from the surface), and most preferably within 300 µm (0 µm to 300 µm from the surface), from the surface.

Alternatively, 70% by mass or more of the total amount of the component B detected by EPMA is present in the surface layer section over a depth of 1000 µm from the outer surface of the catalyst. However, among the total amount of the component B, preferably 75% by mass or more, and more preferably 80% by mass or more is present in the surface layer section covering a depth of 1000 µm from the outer surface of the catalyst. Here, the upper limit of the proportion of the component B present in the surface layer section extending within a depth of 1000 µm from the outer surface of the catalyst is 100% by mass, but if the proportion is preferably 97% by mass, and more preferably about 95% by mass, the objects of the present invention can be sufficiently achieved.

The amount of the component B supported on the component A is not particularly limited, and can be appropriately selected by taking into consideration of the waste water treatment performance. Preferably, the amount of the component B supported on the component A is 0.05% to 5% by mass, and more preferably 0.05% to 0.7% by mass, relative to the total amount of the component A and the component B. With such an amount, the catalyst can exhibit sufficient waste water treatment capacity, and the materials to be treated in the waste water can be treated at a high rate. Meanwhile, when two or more of the component B are used in combination, the amount of the component B supported means the sum of each content thereof.

The average particle size of the component B constituting the invented catalyst is 0.5 nm to 20 nm. In order to accelerate the catalytic wet oxidation reaction by efficiently bringing the pollutants in the waste water into contact with oxygen in air on the catalyst, it is recommended that the component B be highly dispersed in the form of fine particles in the surface layer section of the catalyst. When the component B having such an average particle size is used, the component B is highly dispersed in the form of fine particles in the catalyst surface layer section. Accordingly, the pollutants in the waste water can be efficiently brought into contact with oxygen in air on the catalyst, and the catalytic wet oxidation reaction can be accelerated. Preferably, the upper limit of the average particle size of the component B is 18 nm or smaller, and more preferably 15 nm or smaller. The lower limit of the average particle size of the component B is preferably 2 nm or larger, and more preferably 3 nm or larger. If the average particle size of the component B is smaller than 0.5 nm, the treatment performance is initially increased; however, the aggregation of the particles or the like is prone to occur, then, it is often difficult to retain the treatment performance for a long time. When the particle size of the component B is larger than 20 nm, the component B is likely to be unevenly supported, then, in many cases, sufficient treatment performance cannot be obtained.

The average particle size (diameter) of the component B contained in the catalyst is calculated by employing a TPD analysis (temperature programmed desorption method) for ten samples, and measuring the amount of chemical adsorption according to the CO pulse method. The individual particle size of the component B can be confirmed by chipping the catalyst surface layer section, and observing the surface at a magnification of 100, 000 to 1,000,000 times with a transmission electron microscope.

By making the component B exist in the catalyst surface layer section in an amount equal to or greater than the specific value as described above, and controlling the particle size of the component B, chemical adsorption of the pollutants in the waste water is facilitated and the particles of the component B and the pollutants (the materials to be treated in the waste water) are effectively brought into contact. Thereby, the degradation reaction of the pollutants can be accelerated to a large extent.

In the catalyst of the present invention, the solid acid content of the oxide of the component A is 0.20 mmol/g or greater. The solid acid content is preferably 0.22 mmol/g or greater, more preferably 0.25 mmol/g or greater, even more preferably 0.26 mmol/g or greater, still more preferably 0.27 mmol/g or greater, and particularly preferably 0.30 mmol/g or greater. If the solid acid content is less than 0.20 mmol/g, sufficient catalytic activity may not be obtained. The upper limit of the solid acid content of the oxide of the component A is not particularly limited, but the upper limit is preferably 1.0 mmol/g or less, more preferably 0.8 mmol/g or less, even more preferably 0.6 mmol/g or less, and particularly preferably 0.5 mmol/g or less. When the solid acid content is in the range described above, excellent catalytic activity can be exhibited without causing a decrease of the catalytic activity. As a method for measuring the solid acid content of the component A (base material) in the present invention, temperature programmed desorption method with ammonia adsorption is employed. That is, the solid acid content is specified based on the molar amount of ammonia that is adsorbed per unit mass of the base material. More specifically, the "solid acid content of the oxide of the component A" as used in the present specification is a value measured according to the method described in the Examples described below.

As such, when many acid points exist on the catalyst surface, chemical adsorption of the pollutants in the waste water is facilitated, the pollutants adsorbed as a result of electrical interaction can be activated, thereby the degradation reaction of the pollutants can be accelerated to a large extent.

The specific surface area of the component A of the present invention is not particularly limited. A preferred specific surface area of the component A is 20 m²/g or larger, and the specific surface area is more preferably 25 m²/g or larger, and most preferably 30 m²/g or larger. When the specific surface area is 70 m²/g or larger, the catalyst after molding is prone to disintegrate, and the activity of the catalyst may deteriorate. Therefore, a preferred specific surface area is 70 m²/g or less, and the specific surface area is more preferably 60 m²/g or less, and most preferably 55 m²/g or less. In the present invention, the BET method which analyzes the adsorption of nitrogen is employed as the method for measuring the specific surface area of the catalyst.

There are no particular limitations on the crystal structure of the base material as the component A, and a base material having a crystal structure that can be identified by X-ray diffraction may be used, or a base material having an amorphous structure may also be used.

There are no particular limitations on the pore volume of the base material as the component A, but the pore volume is preferably 0.20 ml/g or greater, and more preferably 0.25 ml/g or greater. The pore volume is preferably 0.50 ml/g or less, and more preferably 0.45 ml/g or less. If the pore volume is less than 0.20 ml/g, the contact efficiency of the catalyst and the pollutants is decreased, and in many cases, sufficient treatment performance may not be obtained. When the pore volume is greater than 0.50 ml/g, the durability of the catalyst after molding may deteriorate. When such catalyst is used in a wet oxidation treatment, the catalyst may disintegrate in an early phase.

As a shape of the catalyst of the present invention, the shape may be conveniently selected according to the purpose, for example, from a pellet shape, a particle shape, a spherical shape, a ring shape, and a honeycomb shape, and the shape is not particularly limited.

The size of the catalyst is not particularly limited, and can be appropriately selected depending on the shape of the catalyst, desired effects, and the like. The size of the component B is substantially the same as the size of the catalyst. For example, when the catalyst has a particle shape (hereinafter, may be called "particulate catalyst"), the average particle size is preferably 1 mm or greater, and more preferably 2 mm or greater. When a particulate catalyst having an average particle size of less than 1 mm is packed in a column reactor, the pressure loss is increased, and the catalyst layer may be clogged by materials suspended and included in the waste water. The average particle size of the particulate catalyst is preferably 10 mm or less, and more preferably 7 mm or less. A particulate catalyst having an average particle size of greater than 10 mm cannot have a sufficient geometric surface area, the contact efficiency with the water to be treated is decreased, and a sufficient throughput may not be obtained.

For example, when the catalyst is produced into a pellet shape (hereinafter, may be called "pellet-shaped catalyst"), the average diameter is preferably 1 mm or greater, and more preferably 2 mm or greater, and is preferably 10 mm or less, and more preferably 6 mm or less. The length in the longitudinal direction of the pellet-shaped catalyst is preferably 2 mm or greater, and more preferably 3 mm or greater, and is preferably 15 mm or less, and more preferably 10 mm or less. When a pellet-shaped catalyst having an average diameter of less than 1 mm or having a length in the longitudinal direction of less than 2 mm is packed in a column reactor, the pressure loss may increase. A pellet having an average diameter of greater than 10 mm or having a length in the longitudinal direction of greater than 15 mm cannot have a sufficient geometric surface area, the contact efficiency with the water to be treated may be decreased, and a sufficient throughput may not be obtained.

When the catalyst is produced into a honeycomb shape (hereinafter, may be called "honeycomb-shaped catalyst"), the corresponding diameter of the through-hole is preferably 1.5 mm or greater, and more preferably 2.5 mm or greater, and is preferably 10 mm or less, and more preferably 6 mm or less. The thickness between adjacent through-holes is preferably 0.1 mm or greater, and more preferably 0.5 mm or greater, and is preferably 3 mm or less, and more preferably 2.5 mm or less. The aperture ratio at the catalyst surface is preferably 50% or greater, and more preferably 55% or greater, and is preferably 90% or less, and more preferably 85% or less, relative to the total surface area. When a honeycomb-shaped catalyst having a corresponding diameter of less than 1.5 mm is packed in a column reactor, the pressure loss may increase. When a honeycomb-shaped catalyst having a corresponding diameter of greater than 10 mm is packed, the pressure loss is decreased, but the contact efficiency with the water to be treated is decreased, then, the catalytic activity may decrease. A honeycomb-shaped catalyst having a thickness between the through-holes of less than 0.1 mm has an advantage that the weight of the catalyst can be reduced, but the mechanical strength of the catalyst may decrease. A honeycomb-shaped catalyst having a thickness between the through-holes of greater than 3 mm has a sufficient mechanical strength, but, since the amount of use of the catalyst raw material increases, the cost may increase therewith. Also, with regard to the aperture ratio at the catalyst surface, it is desirable to adjust the aperture ratio to be within the range described above, from the viewpoints of mechanical strength of catalyst and the catalytic activity.

Meanwhile, when the catalyst is packed in a column reactor, and a waste water containing suspended materials is treated by a wet oxidation treatment, the catalyst layer may be clogged due to the solids in the waste water or the precipitation of the suspension. Therefore, among the catalysts described above, it is particularly recommended to use a honeycomb-shaped catalyst.

The catalyst of the present invention essentially contains the component A and the component B, but the catalyst may also contain another component in addition to the component A and the component B. Preferably, the catalyst of the present invention is composed only of the component A and the component B. Here, there are no particular limitations on the other component, but examples thereof include alkali metals and compounds thereof. Among these, alkali metals and compounds thereof are preferred, and sodium, potassium and compounds thereof are more preferred. The content of the other component is not particularly limited, and can be appropriately selected in accordance with the desired waste water treatment capacity or the like. In the case where the catalyst of the present invention contains another component, the content of the other component is preferably 0.05% to 2% by mass relative to the total amount of the component A and the component B.

There are no particular limitations on the method for preparing the catalyst related to the present invention, and the catalyst can be easily prepared by a known method. Examples of the method include kneading method, impregnation method, adsorption method, spray method, and ion exchange method.

As discussed above, the catalyst of the present invention is characterized in that 70% by mass or more of the component B in the total amount of the component B is present in the surface layer section covering from the outer surface to a depth of 1000 µm of the oxide of the component A (catalyst). However, the way of making most of the component B into being selectively in the surface layer section of the oxide of the component A (catalyst) as such, is not particularly limited as long as it can achieve such selective existence, and the methods for preparing a catalyst described above can be applied. Preferably, a spray method, and particularly spraying an aqueous solution of the component B to the oxide of the component A can be preferably used. Hereinafter, a preferred method for producing the catalyst of the present invention will be explained. However, the method for producing the catalyst of the present invention is not intended to be limited to one described below.

First, an iron compound, preferably iron oxide, and an oxide (another oxide) of at least one element selected from the group consisting of titanium, silicon, aluminum, zirconium and cerium are molded into a predetermined shape, and thus the component A is prepared. Here, the mixing ratio of the iron compound and the other oxide is not particularly limited, but it is preferably a mixing ratio such as described above. The shape of the component A of the present invention is not particularly limited, and can be appropriately selected in accordance with the desired shape of the catalyst. Examples of the shape include pellet shape, particle shape, spherical shape, ring shape, and honeycomb shape.

Next, a solution of the raw material compound of the component B is prepared. Here, the raw material compound of the component B is not particularly limited as long as it is selected from the components described above; however, the raw material compound is preferably a water-soluble compound, and more preferably an inorganic compound. The component B may be an emulsion type compound or a compound in the form of slurry or colloid, and a suitably compound may be appropriately used in accordance with the method for preparing the catalyst, or the type of the component A. Specific examples of the component B include the same compounds as described above. The solvent for dissolving the component B is not particularly limited as long as the solvent is capable of dissolving or dispersing the raw material compound of the component B. Specific examples thereof include water, methanol, and ethanol. The solvent may be used singly, or may be used in the form of a mixture of two or more. The concentration of the raw material compound of the component B in the solution is not particularly limited, but the concentration of the raw material compound is preferably a concentration which results in the supported amount of the component B on the component A such as described above.

Meanwhile, when the catalyst of the present invention contains another component, the other component may be added in any step. Specifically, a following method can be used: preparing the component A by mixing an iron compound, another oxide and the other component; preparing a solution of the raw material compound of the component B by dissolving the raw material compound of the component B and the other component in a solvent; supporting the component B on the component A, and then incorporating the other component; supporting the component B on the component A, and then supporting the other component on the component A. Among these, preparing a solution of the raw material compound of the component B by dissolving the raw material compound of the component B and the other component in a solvent is preferred. With such a method, the component B and the other component can be supported on the component A conveniently and in a single step.

The solution of the raw material compound of the component B prepared described above is sprayed onto the component A. Here, the amount of the solution of the raw material compound of the component B sprayed onto the component A is not particularly limited, but the amount is preferably an amount that is equal to the supported amount described above. More preferably, the amount sprayed is an amount by which 5 to 90 parts by mass of the solution of the raw material compound of the component B, relative to 100 parts by mass of the component A, is sprayed. With such an amount, the component B can be selectively and uniformly supported on the surface layer section extending within 1000 µm from the outer surface of the component A.

After the spray process described above, drying is performed if necessary, and a reduction treatment of the component B is carried out. Thereby, the catalyst of the present invention can be produced. Here, the drying conditions are not particularly limited, but for example, the drying temperature is preferably 80°C to 200°C, and more preferably 90°C to 160°C. The drying time is preferably 0.5 to 24 hours, and more preferably 1 to 12 hours. Also, it is preferable to perform the drying process while rotating the component A on which a solution of the raw material compound of the component B has been sprayed. Thereby, the component B can be selectively and uniformly supported on the surface layer section extending within 1000 µm from the outer surface of the component A. The reduction treatment conditions for the component B are not particularly limited, but for example, the reduction treatment temperature is preferably 150°C to 600°C, and more preferably 200°C to 400°C. The reduction treatment time is preferably 1 to 5 hours, and more preferably 2 to 4 hours. Under such conditions, the particle size growth (sintering) of the component B does not occur, and the component B having a desired size can be supported on the component A. The reduction treatment is carried out in a reducing atmosphere. The reducing atmosphere is not particularly limited as long as the raw material compound of the component B is reduced, but it is preferable to carry out the reduction treatment in an atmosphere of a mixed gas of a reducing gas and an inert gas. There are no particular limitations on the reducing gas, but hydrogen (H2) gas is preferred. Also, there are no particular limitations on the inert gas, but helium (He), neon (Ne), argon (Ar), krypton (Kr), xenon (Xe), nitrogen (N₂) and the like can be used. The inert gas may be used singly, or may be used in the form of a gas mixture of two or more. There are no particular limitations on the concentration of the reducing gas that is included in the inert gas, but in view of safety or the like, the concentration of the reducing gas is preferably 1% to 20% by volume relative to the total amount of the gas mixture. Under such conditions, the component B can be efficiently supported on the component A.

The catalyst of the present invention such as described above can exhibit an especially excellent activity on the wet oxidation of waste water. A method for treating waste water is provided, the method including subjecting waste water to wet oxidation using the catalyst for waste water treatment. Particularly, there is provided a method for treating waste water, the method including subjecting a waste water containing at least one of organic compounds, nitrogen compounds and sulfur compounds, to wet oxidation using the catalyst for waste water treatment, in the presence of an oxidizing agent, at a temperature of equal to or higher than 80°C and lower than 370°C and under a pressure condition so as to keep the waste water in liquid phase.

Alternatively, the following can also exhibit an especially excellent activity effect on the wet oxidation of waste water: (I) a catalyst containing oxides or a composite oxide of at least two selected from the group consisting of titanium, iron, zirconium, cobalt, nickel, cerium, lanthanum, manganese, yttrium, indium, zinc and bismuth as a component A', and at least one selected from the group consisting of silver, platinum, palladium, ruthenium, rhodium, iridium and gold as a component B' (hereinafter, also referred to as "catalyst of (I)"); and (II) a catalyst formed by coating a porous inorganic oxide with a noble metal and an activating aid (hereinafter, also referred to as "catalyst of (II)"). A method for treating waste water is also provided, the method including subjecting waste water to wet oxidation using a catalyst containing oxides of at least two selected from the group consisting of titanium, iron, zirconium, cobalt, nickel, cerium, lanthanum, manganese, yttrium, indium, zinc and bismuth, or a composite oxide thereof as a component A', and at least one selected from the group consisting of silver, platinum, palladium, ruthenium, rhodium, iridium and gold as a component B', or a catalyst formed by coating a porous inorganic oxide with a noble metal and an activating aid. Particularly, there is provided a method for treating waste water, the method including a step of subjecting a waste water containing at least one of organic compounds, nitrogen compounds and sulfur compounds to a wet oxidation treatment using the catalyst for waste water treatment, in the presence of an oxidizing agent, at a temperature of equal to or higher than 80°C and lower than 370°C under a pressure condition so as to retain the waste water in liquid phase.

Among the catalysts described above, the catalyst (I) is particularly a catalyst for nitrogen-containing compound treatment, and a catalyst containing oxides or a composite oxide of at least two selected from the group consisting of titanium, iron, zirconium, cobalt, nickel, cerium, lanthanum, manganese, yttrium, indium, zinc and bismuth as a component A' and at least one selected from the group consisting of silver, platinum, palladium, ruthenium, rhodium, iridium and gold as a component B'.

The component A' may be any combination of two or more, and may also be a combination of three or more. The component A' is preferably oxides or a composite oxide of at least two selected from titanium, iron, zirconium, cerium, lanthanum, manganese, indium and zinc, and is more preferably oxides or a composite oxide of at least two selected from titanium, iron, zirconium and cerium.

The component A' may be a mixture of individual oxides or may be a composite oxide, and it is effective that various components are intimately mixed. The composite oxide may be a substance having a crystal structure that can be identified by X-ray diffraction, or may be an amorphous substance.

The production of the component A' is not particularly limited, and a known method can be applied directly or after appropriate modification. The raw materials of the component A' are not particularly limited, but are preferably water-soluble salts. Examples thereof include inorganic compounds such as nitrates, sulfates, and halides; and organic acid salts such as acetates, oxalates and citrates, and preferred examples include nitrates, sulfates and acetates.

The content, in terms of oxides, of the component A' in the catalyst is 90% to 99.95% by mass, and preferably 95% to 99.90% by mass, with respect to the catalyst.

The component B' is at least one selected from the group consisting of silver, platinum, palladium, ruthenium, rhodium, iridium and gold, and preferred examples thereof include platinum, palladium, ruthenium and rhodium, while more preferred examples include palladium and ruthenium.

As the raw materials of the component B', any of organic acid salts and inorganic acid salts can all be used, but water-soluble salts are preferred. For example, the raw material can be appropriately selected from nitrates, oxalates, ammonium salts, halides and the like of the metals described above.

The content, in terms of metal, of the component B' in the catalyst is 0.05% to 10% by mass, and preferably 0.1% to 5% by mass, based on the catalyst. If the content is less than 0.05% by mass, the effect of the noble metal element as the component B' is small, and the activity of the catalyst is not enhanced. Also, if the component B' is used at a proportion of greater than 10% by mass, an enhancement of the catalyst performance worth with the increase of the catalyst cost may not be obtained, and therefore, it is not economically preferable.

Next, the method for producing the catalyst (I) will be described below, but any method may be used as long as it is a method for preparing a catalyst that is conventionally used in a wet oxidation treatment. Followings or the like can be adopted: (1) adding water-soluble salts of various components to water, mixing the components, and adjusting the pH using ammonia or a hydroxide to co-precipitate the components; (2) a supporting method of supporting other components on an oxide or the like; (3) a mixing method of mixing solids such as the oxides of various components . A preferred method is the method of supporting other components on an oxide or the like. An oxide of at least one element selected from the component A' may be used as a base material component of the catalyst, and the other components may be supported on the base material component. The catalyst can be produced by supporting the component B' on these supporting components, or by incorporating the component B' in the preparation of the oxides or composite oxide of the component A'. Preferably, the catalyst is obtained by: the composite oxide is obtained by co-precipitating precursors of the component A', and further, the composite oxide is coated by impregnating the composite oxide with an aqueous liquid of the component B'.

There are no particular limitations on the shape of the catalyst, and for example, the shape may be any of particle shape, spherical shape, pellet shape, granular shape, saddle shape, honeycomb-shape and ring shape. In the case of pellet shape, a catalyst having any arbitrary shape of any cross-section such as circular, elliptic, polygonal, trefoil, quatrefoil or the like, can be used.

Among the catalysts described above, the catalyst (II) is a catalyst for nitrogen-containing compound treatment, characterized in that a porous inorganic oxide is coated with a noble metal and an activating aid.

The catalyst contains, as the noble metal, a metal and/or an oxide of at least one element selected from silver, platinum, palladium, ruthenium, rhodium, iridium and gold, and preferably, the catalyst contains platinum, palladium, ruthenium or iridium. More preferably, the catalyst contains platinum, palladium, or ruthenium. Particularly preferably, the catalyst contains palladium or ruthenium.

As the raw material of the noble metal, a water-soluble salt is used, and any of organic acid salts and inorganic acid salts can all be used. For example, the raw material can be appropriately selected from nitrates, oxalates, ammonium salts, halides and the like of the noble metals described above.

The activating aid is an oxide of at least one selected from the group consisting of titanium, iron, zirconium, cobalt, nickel, cerium, lanthanum, manganese, yttrium, indium, zinc and bismuth, or a composite oxide of at least two selected from the group described above. The activating aid is preferably an oxide of at least one selected from the group consisting of titanium, iron, zirconium, cerium, lanthanum, manganese, yttrium and indium, or a composite oxide of at least two selected from the group described above. More preferably, the activating aid is an oxide of at least one selected from the group consisting of titanium, zirconium, cerium and lanthanum, or a composite oxide of at least two selected from the group described above. Particularly preferably, the activating aid is titanium oxide (TiO₂), zirconia (ZrO₂), ceria (CeO₂), or lanthanum oxide (La₂O₃). The activating aid may be used singly, or may be used in the form of a mixture of two or more. Usually, these materials exist as oxides in the catalyst. When the activating aid and a noble metal are used, production of nitrate nitrogen and/or nitrite nitrogen can be suppressed.

As the raw material of the activating aid, a water-soluble compound, a gel or the like can be used, and specific examples thereof include inorganic compounds of the metals described above such as nitrates, sulfates and chlorides; and organic acid salts of the metals described above such as acetates, oxalates and citrates. Preferred examples include nitrates, sulfates, and acetates.

There are no particular limitations on the porous inorganic oxide, and materials that are conventionally used in catalysts can be used. Specifically, the porous inorganic oxide is an oxide or a composite oxide of at least one selected from the group consisting of titanium, iron, silicon, zirconium, cobalt, nickel, aluminum, cerium, lanthanum, manganese, yttrium, indium, zinc and bismuth, or activated carbon. Preferably, the porous inorganic oxide is an oxide or a composite oxide of at least one selected from the group consisting of titanium, iron, silicon, zirconium, aluminum, cerium, lanthanum, indium, and bismuth. More preferably, the porous inorganic oxide is an oxide or a composite oxide of at least one selected from the group consisting of titanium, iron, zirconium, cerium and lanthanum. In some cases, the porous inorganic oxide and the activating aid may be an oxides of the same elements; however, the porous inorganic oxide and the activating aid can be distinguished each other since the type of the precursors, or the stage for the usage of the materials during the production is different each other.

The contents of the activating aid, the noble metal and the porous inorganic oxide are not particularly limited. When the sum of the activating aid (in terms of oxide), the noble metal (in terms of metal) and the porous inorganic oxide is taken as 100% by mass, the content of activating aid, in terms of oxide, is preferably 0.1% to 30% by mass, more preferably 0.2% to 20% by mass, and particularly preferably 0.5% to 10% by mass. When the sum of the activating aid (in terms of oxide), the noble metal (in terms of metal) and the porous inorganic oxide is taken as 100% by mass, the content of noble metal, in terms of metal, is preferably 0.05% to 10% by mass, and more preferably 0.1% to 3% by mass. The sum of the activating aid (in terms of oxide), the noble metal (in terms of metal) and the porous inorganic oxide is taken as 100% by mass, the content of porous inorganic oxide is preferably 60% to 99.85% by mass, and more preferably 77% to 99.7% by mass. If the amount of the noble metal is less than 0.05% by mass, the effect of the noble metal element is small, and the activity of the catalyst is not enhanced. Even if the noble metal is used at a proportion of greater than 10% by mass, an enhancement of the catalytic performance worth the increase of catalyst cost may not be obtained, and therefore, it is not economically preferable.

As the production method, a porous inorganic oxide is added to an aqueous solution of the respective precursors of a noble metal and an activating aid dissolved therein, and water is evaporated therefrom by heating. Thereby, the porous inorganic oxide can be impregnated with the noble metal and the activating aid. A porous inorganic oxide is added, and an alkaline compound is added, to an aqueous solution of the respective precursors of a noble metal and an activating aid dissolved therein, and thus precipitates obtained therefrom can be supported on the porous inorganic oxide.

A method of simultaneously impregnating the porous inorganic oxide with a noble metal component and an activating aid, or a method of sequentially impregnating the porous inorganic oxide with a noble metal component and an activated component can be appropriately selected. The catalyst after impregnation is dried, calcined and/or reduced, and thereby a catalyst in which a porous inorganic oxide is coated with the noble metal and the activating aid can be obtained. A preferred method is a method of evaporating an aqueous solution containing a noble metal component and an activating aid, or adding an alkaline substance and co-precipitating the components. Meanwhile, the calcination temperature for the catalyst is preferably 300°C to 800°C, and more preferably 350°C to 600°C. It is also preferable to perform a reduction treatment in an atmosphere of hydrogen or nitrogen.

For this catalyst preparation process, a process of heat treating the catalyst obtained after the impregnation and support of an activating aid, in an oxidizing atmosphere at a temperature of 300°C or higher, and more preferably 400°C to 600°C, for 1 to 5 hours, and more preferably for 2 to 4 hours, can be employed at least once. Through this operation, high purifying performance can be maintained. Here, the oxidizing atmosphere may be obtained by using air, a gas mixture of oxygen and an inert gas, or the like.

The shape of the catalyst is not particularly limited, and for example, any one of a particle shape, spherical shape, pellet shape, fractured shape, saddle shape, honeycomb shape, and ring shape may be used. In the case of pellet shape, a catalyst having any arbitrary shape whose cross-section is circular, elliptic, polygonal, trefoil, quatrefoil or the like, can be used.

Next, a method of treating waste water by using the catalyst of the present invention, the above-mentioned catalyst of (I) or the above-mentioned catalyst of (II) will be explained. Meanwhile, in the method, the catalyst of the present invention, the catalyst of (I) and the catalyst of (II) are used such that each of the catalysts may be used singly or in the form of a mixture of two or more, or at least one of the respective catalysts may be used in combination.

Hereinafter, the method for treating waste water by a wet oxidation treatment using the catalyst related to the present invention will be described in detail.

The waste water may further include a catalyst poisoning material and/or an alkali metal. When the waste water contains a catalyst poisoning material, an alkali metal of sodium and/or potassium may be added to the original water before treatment in a wet oxidation treatment. An adjustment of the pH of the original water before treatment is also appropriately carried out.

The catalyst poisoning material related to the present invention is not particularly limited as long as it causes catalyst poisoning during the wet oxidation treatment, and examples thereof include heavy metals, calcium, magnesium, aluminum, phosphorus and silicon. Meanwhile, the catalyst poisoning material is not limited to the form of simple metal, and may exist in any form containing the metal.

Particularly, when waste water includes a catalyst poisoning material containing phosphorus, it is preferable to add a cation in advance to the waste water, and it is preferable to add an alkali metal ion, particularly an alkali metal ion of sodium and/or potassium, in this invention. The amount of addition of the alkali metal ion is preferably adjusted such that the content ratio as a molar ratio of the alkali metal, particularly sodium and/or potassium, with respect to phosphorus (= molar ratio of alkali metal/phosphorus) is 3 or greater. If the content ratio is less than 3, the effect of adding an alkali metal ion is small, and the treatment performance may decrease as phosphorus covers the active sites. Meanwhile, the upper limit of the molar ratio of alkali metal/phosphorus is not particularly limited, but the molar ratio is preferably adjusted to 5 or less, and more preferably 4 or less.

The pH of the waste water is preferably adjusted to 6 or higher, more preferably 7 or higher, and particularly preferably 8 or higher. Meanwhile, the upper limit of the pH of the waste water is not particularly limited, but when the ease of handling or the corrosion of the facilities is taken into consideration, it is preferable to adjust the pH to 14 or lower. Any agent that is dissolved and turns basic may be used as the pH adjusting agent, but preferred examples include sodium hydroxide, potassium hydroxide, sodium carbonate, potassium carbonate, sodium acetate, and potassium acetate. By adjusting the pH of the original waste water in advance to pH 6 or higher, not only catalyst poisoning by phosphorus can be suppressed, but also the waste water can be prevented from turning acidic during the treatment and impairing the durability of the reaction pipe. Meanwhile, the upper limit of the pH of the waste water is not particularly limited, but it is preferable to adjust the pH of the waste water to 13.5 or lower, and more preferably 13 or lower.

The type of the waste water treated by the wet oxidation treatment is not particularly limited, as long as the waste water contains any one or more of organic compounds, nitrogen compounds and sulfur compounds. Examples of such waste water include the waste water discharged from various industrial plants such as chemical plants, electronic component production facilities, food processing facilities, metal processing facilities, metal plating facilities, printing or plate making facilities, and photographic facilities; and the waste water discharged from power-generating facilities such as thermal power generation and atomic power generation. Specific examples include a waste water containing an aromatic compound such as phenol that is discharged from a chemical plant; a waste water discharged from EOG production facilities or textile production facilities,
containing ethylene glycol, dioxane, propylene glycol and the like; a waste water discharged from alcohol production facilities, containing methanol, ethanol, higher alcohols and the like; and particularly a waste water containing organic compounds that are discharged from the production processes for aliphatic carboxylic acids or esters thereof such as acrylic acid, acrylic acid esters, methacrylic acid, methacrylic acid esters, or aromatic carboxylic acids or aromatic carboxylic acid esters such as terephthalic acid and terephthalic acid esters. Waste water containing nitrogen compounds such as amines, imines, ammonia, and hydrazine is also acceptable. Waste water containing sulfur compounds that are discharged from the plants of a wide variety of industrial fields such as paper/pulp, textile, iron and steel, ethylene, BTX, coal gasification, meat processing, and pharmaceuticals, is also acceptable. Examples of the sulfur compounds as used herein include inorganic sulfur compounds such as hydrogen sulfide, sodium sulfide, potassium sulfide, sodium hydrosulfide, thiosulfuric acid salts, and sulfurous acid salts; and organic sulfur compounds such as mercaptans and sulfonic acids. Other examples also include domestic waste water such as sewage and excrements. Waste water containing hazardous substances, including organic halogen compounds and environmental hormone compounds such as dioxins, chlorofluorocarbons, diethylhexyl phthalate, and nonylphenol, is also acceptable.

The term "waste water" according to the present application is not limited to the so-called industrial waste water that is discharged from industrial plants as described above, but rather encompasses any liquid containing any one or more of organic compounds, nitrogen compounds and sulfur compounds. The source of such a liquid is not particularly limited.

The catalyst related to the present invention is used in a wet oxidation treatment, but it is particularly recommended that the catalyst be used when a wet oxidation treatment is carried out by heating the waste water, and at a pressure at which the waste water retains the liquid state.

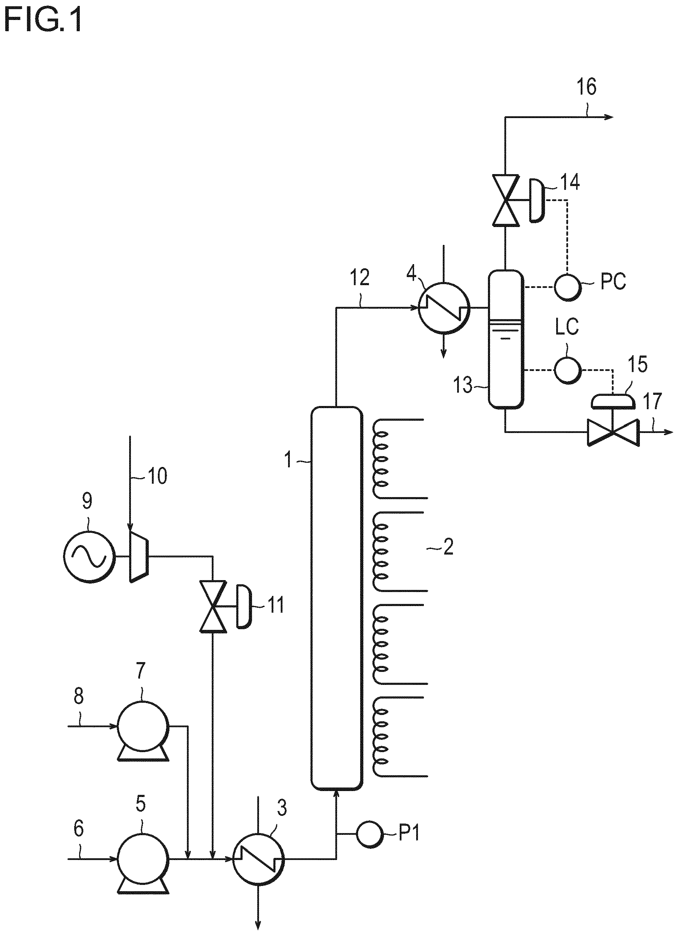

The method of treating waste water by using the treatment apparatus of FIG. 1 will be described below. FIG. 1 is a schematic diagram showing an example of the treatment apparatus in which a wet oxidation treatment is employed as one of the oxidation treatment processes. However, the apparatus is not intended to be limited to this.

The waste water supplied from a waste water source is supplied to a waste water supply pump 5 through a waste water supply line 6, and is further sent to a heater 3. The spatial velocity used there is not particularly limited, and may be conveniently determined depending on the throughput of the catalyst.

When the catalyst related to the present invention is used, the wet oxidation treatment can be carried out under supply of an oxidizing agent.

In the case of supplying an oxygen-containing gas as the oxidizing agent for example, the oxygen-containing gas is preferably introduced through an oxygen gas supply line 10, compressed by a compressor 9, and then incorporated into the waste water before the waste water is supplied to the heater 3.

The oxidizing agent related to the present invention may be any agent capable of oxidizing the substances to be oxidized in the waste water, and examples thereof include gas containing oxygen and/or ozone, and hydrogen peroxide. Generally, in the case of using gas, the gas is preferably air. In addition to that, an oxygen-containing exhaust gas generated from other plants can also be conveniently used. The substances to be oxidized are organic compounds, nitrogen compounds and sulfur compounds.

In the case of supplying an oxidizing agent to the waste water, the amount of supply is not particularly limited, and any amount effective to increase the ability of oxidation/degradation treatment of the substances to be oxidized in the waste water may be supplied. When the oxidizing agent is gas, the amount of supply thereof to the waste water can be appropriately regulated by providing, for example, an oxygen-containing gas flow rate regulating valve 11 on the oxygen-containing gas supply line 10. As preferred amount of supply of the oxidizing agent, it is recommended to adjust the amount of supply to 0.5 times or more, and more preferably 0.7 times or more, the molar amount of the theoretical oxygen demand of the substances to be treated in the waste water, and preferably to 5.0 times or less, and more preferably 3.0 times or less, the molar amount of the theoretical oxygen demand. If the amount of supply of the oxidizing agent is less than 0.5 times the molar amount, the substances to be oxidized are not sufficiently oxidized or degraded, and a relatively large amount thereof may remain in the liquid obtained after the wet oxidation treatment. Also, if oxygen is supplied in an amount larger than 5.0 times the molar amount, the oxidation/ degradation throughput may be saturated.

The term "theoretical oxygen demand" in the present application is an amount of oxygen required to oxidize and/or degrade the substances to be oxidized, such as organic compounds or nitrogen compounds in the waste water, to nitrogen, carbon dioxide, water, and ashes.

The waste water sent to the heater 3 is preliminarily heated, and then is supplied to a column reactor 1. If the temperature of the waste water is excessively increased, the waste water changes into gas state in the column reactor, organic materials may attach to the catalyst surfaces, and the activity of the catalyst may deteriorate. Therefore, it is recommended to apply a pressure which keeps the waste water in liquid phase in the column reactor, thereby the waste water can retain the liquid phase even at a high temperature. Although the system may also be affected by other conditions, the temperature of the waste water is set to a temperature equal to or higher than 80°C and lower than 370°C. When the temperature of the waste water inside the column reactor is 370°C or higher, to apply high pressure is necessary in order to retain the liquid phase of the waste water. Thus, in this case, larger-sized facilities may be required, and the running cost may increase. The temperature of the waste water inside the column reactor is preferably 280°C or lower, more preferably 270°C or lower, even more preferably 250°C or lower, still more preferably 240°C or lower, even more preferably 230°C or lower, and even more preferably 170°C or lower. On the other hand, if the temperature of the waste water is lower than 80°C, it may be difficult to efficiently carry out the oxidation/degradation treatment of the substances to be oxidized in the waste water. Therefore, the temperature of the waste water inside the column reactor is a temperature of preferably 80°C or higher, more preferably 100°C or higher, even more preferably 110°C or higher, still more preferably higher than 120°C, even more preferably higher than 130°C, and particularly preferably higher than 140°C.

There are no particular limitations on the timing to heat the waste water, and as described above, a waste water heated in advance may be supplied to the column reactor, or it is also acceptable to heat the waste water after the waste water is supplied to the column reactor. Also, there are no particular limitations on the method of heating the waste water, and the waste water may be heated using a heater or a heat exchanger, or may be heated by a heater provided inside the column reactor. A heat source such as steam may also be supplied to the waste water.

It is also preferable to provide a pressure control valve on the exhaust gas outlet side of the wet oxidation treatment apparatus, to thereby appropriately adjust the pressure depending on the treatment temperature, so that the waste water can retain the liquid phase inside the column reactor. For example, when the treatment temperature is equal to or higher than 80°C and lower than 95°C, the waste water is in the liquid state even under the atmospheric pressure. From the viewpoint of economic efficiency, the treatment may be carried out under the atmospheric pressure, but it is preferable to apply pressure in order to enhance the treatment efficiency. When the treatment temperature is 95°C or higher, the waste water is often vaporized under the atmospheric pressure. Therefore, it is desirable to control the pressure so that the waste water can retain the liquid phase, by applying a pressure of about 0.2 MPa to 1 MPa (gauge) when the treatment temperature is equal to or higher than 95°C and lower than 170°C, a pressure of about 1 MPa to 5 MPa (gauge) when the treatment temperature is equal to or higher than 170°C and lower than 230°C, and a pressure of greater than 5 MPa (gauge) when the treatment temperature is equal to or higher than 230°C.

In regard to the wet oxidation treatment used in the present application, there are no particular limitations on the number, type, shape and the like of the column reactor, and those column reactors that are conventionally used in a wet oxidation treatment can be used singly or as a combination of plural columns. For example, a single column system reactor, or a multi-column system reactor can be used. When plural column reactors are installed, the reactors can be arbitrarily arranged, such as in series or in parallel, according to the purpose.

As the method for supplying waste water into a column reactor, various forms such as gas-liquid cocurrent upward flow, gas-liquid cocurrent downward flow, gas-liquid countercurrent flow can be used. When plural column reactors are provided, two or more of these supply methods may be combined.

When the solid catalyst described above is used in the wet oxidation treatment inside the column reactor, the oxidation/degradation treatment efficiency for the substances to be oxidized, such as any one or more of organic compounds, nitrogen compounds and sulfur compounds contained in the waste water, is improved.

The amount of packing of the catalyst to be packed in the column reactor is not particular limited, and can be appropriately determined according to the purpose. Usually, it is recommended to adjust the amount of packing of the catalyst such that the spatial velocity per catalyst layer is 0.1 hr⁻¹ to 10 hr⁻¹, more preferably 0.2 hr⁻¹ to 5 hr⁻¹, and even more preferably 0.3 hr⁻¹ to 3 hr⁻¹. If the spatial velocity is less than 0.1 hr⁻¹, the throughput of the catalyst is decreased, and excessive facilities may be required. On the contrary, if the spatial velocity exceeds 10 hr⁻¹, the oxidation/degradation treatment of the waste water in the column reactor may be insufficiently achieved.

In the case of using plural column reactors, different catalysts may be used in the respective reactors, or a column reactor that is packed with a catalyst and a column reactor that does not use a catalyst may be combined. Thus, the method of using the catalyst related to the present invention is not particular limited.

There are no particular limitations on the shape of the catalyst to be packed, and the shape may be any of, for example, particle shape, spherical shape, pellet shape, granular shape, saddle shape, honeycomb shape and ring shape. In the case of pellet shape, a catalyst having any arbitrary morphology whose cross-section is circular, elliptic, polygonal, trefoil, quatrefoil or the like, can be used.

For the purposes of stirring the gas and liquid, enhancing the contact efficiency, and reducing drift in the gas and liquid, various fillers and inbuilt objects may be incorporated inside the column reactor.

The substances to be oxidized in the waste water are subjected to a oxidation/degradation treatment inside the column reactor, and the term "oxidation/degradation treatment" means various oxidation and/or degradation including, for example: an oxidative degradation treatment of converting acetic acid to carbon dioxide and water; a decarboxylation degradation treatment of converting acetic acid to carbon dioxide and methane; an oxidation treatment of converting a sulfide, a hydrosulfide, a sulfite or a thiosulfate into a sulfate; an oxidation and oxidative degradation treatment of converting dimethyl sulfoxide into carbon dioxide, water, and ashes such as sulfate ion; a hydrolysis treatment of converting urea into ammonia and carbon dioxide; an oxidative degradation of converting ammonia or hydrazine into nitrogen gas and water; and an oxidation treatment of converting dimethyl sulfoxide into dimethylsulfone or methanesulfonic acid. That is, the treatment widely includes: a treatment of degrading substances to be oxidized that are easily degradable, down to nitrogen gas, carbon dioxide, water, ashes and the like; and a degradation treatment of converting an organic compound or nitrogen compound that is not easily degradable, into low molecular weight compounds; or an oxidation treatment of oxidizing the organic compound or nitrogen compound that is not easily degradable.

In many cases, poorly degradable organic compounds in the substances to be oxidized are converted to low molecular weight compounds, and, the low molecular weight compounds remain in the liquid treated through a wet oxidation treatment. In many cases, as the low molecular weight compounds, they include low molecular weight organic acids, particularly acetic acid.

FIG. 1 specifically shows a treatment example, in which the waste water is subjected to an oxidation/degradation treatment in the column reactor, the treated liquid is taken out from a treated liquid line 12 and is appropriately cooled by cooler 4 as necessary, and then the treated liquid is separated into gas and liquid by gas-liquid separator 13. Here, it is preferable to detect the liquid surface state by using liquid surface controller LC, and to control the liquid surface inside the gas-liquid separator to be constant, by means of liquid surface control valve 15. It is preferable to detect the pressure state using pressure controller PC, and to control the pressure inside the gas-liquid separator to be constant, by means of pressure control valve 14.

Alternatively, after the waste water is subjected to an oxidation/degradation treatment, the treated liquid is not cooled, but the treated liquid may be cooled to a certain degree in a cooler, and subsequently discharged through a pressure control valve, and then the treated liquid may be separated into gas and liquid by a gas-liquid separator.

The temperature inside the gas-liquid separator is not particularly limited. However, since the liquid obtained by treating waste water by an oxidation/degradation treatment in the column reactor contains carbon dioxide, it is preferable to discharge the carbon dioxide from the liquid by, for example, increasing the temperature inside the gas-liquid separator, or to discharge the carbon dioxide from the liquid by subjecting the liquid obtained after separation in the gas-liquid separator, to a bubbling treatment with a gas such as air.

In the temperature control of the treated liquid, the treated liquid may be cooled by a cooling unit such as a heat exchanger (not shown in the diagram) or the cooler 4 before being supplied to the gas-liquid separator 13, or the treated liquid may be cooled by providing a cooling unit such as a heat exchanger (not shown in the diagram) or a cooler (not shown in the diagram) after the gas-liquid separation.

The liquid obtained after the separation in the gas-liquid separator 13 (treated liquid) is discharged through a treated liquid discharge line 17. The discharged liquid may also be purified by further subjecting the discharged liquid to various known processes such as a biological treatment and a membrane separation treatment. A portion of the liquid obtained after the wet oxidation treatment may also be subjected to the wet oxidation treatment by returning the portion directly to the waste water before being subjected to the wet oxidation treatment, or by supplying the portion to waste water at any position along the waste water supply line. For example, the TOD concentration or the COD concentration of the waste water may be decreased by using the liquid obtained after the wet oxidation treatment, as a diluent water for the waste water.

The gas obtained after the separation at the gas-liquid separator 13 is discharged out of the system through gas discharge line 16. Here, the discharged exhaust gas may be further subjected to other processes.

When the wet oxidation treatment described in the present application is carried out, a heat exchanger can be used in place of the heater and the cooler, and these can also be used in an appropriate combination.

When the waste water contains a catalyst poisoning material, or a pH adjustment is needed, an aqueous solution can be supplied through alkali supply line 8 using alkali supply pump 7.

As explained above, when the method described above is used, the substances contained in waste water, such as organic compounds, nitrogen compounds and sulfur compounds, can be treated. Among these substances, particularly in the case of treating nitrogen compounds (nitrogen-containing compounds), it is preferable to use a catalyst which converts a nitrogen-containing compound into ammoniacal nitrogen (pre-catalyst) on the upstream side in the flow direction of the waste water, and to use a downstream side catalyst which treats ammoniacal nitrogen-containing waste water (post-catalyst) on the downstream side, in the method described above.

The application provides a method for treating a waste water containing a nitrogen-containing compound in the presence of an oxidizing agent, at a temperature of equal to or higher than 100°C and lower than 370°C, under the pressure conditions so as to keep the waste water in liquid phase, characterized in that a catalyst which converts a nitrogen-containing compound into ammoniacal nitrogen (pre-catalyst) is used on the upstream side in the flow direction of waste water, and a downstream catalyst which treats an ammoniacal nitrogen-containing waste water (post-catalyst) is used on the downstream side.

Here, the waste water to be treated may be any waste water as long as it contains a nitrogen-containing compound, and examples thereof include waste water containing various nitrogen-containing compounds, including waste water discharged from various industrial plants such as chemical plants, electronic component production facilities, food processing facilities, printing or plate making facilities, power-generating facilities, photographic facilities, metal processing facilities, metal plating facilities, metal refining facilities, and paper pulp production facilities; domestic waste water such as excrements and sewage; waste water discharged from various hazardous substances treating facilities such as wet scrubbing waste water; and landfill leachate. An extract liquid obtained by extracting hazardous substances in the soil into liquid in order to treat a soil containing hazardous substances, can also be dealt with as the waste water to be treated by catalyst of the present invention.

The nitrogen-containing compound described in the present application is not particularly limited as long as the compound contains a nitrogen atom, and examples thereof include inorganic nitrogen compounds, amine compounds, amide compounds, amino acid compounds, nitrogen-containing 5-membered ring compounds, nitrates, nitrites, nitro compounds, nitroso compounds, nitrosyl compounds, and polymers containing nitrogen. Preferred examples of the nitrogen-containing compound include amine compounds, amide compounds, amino acid compounds, nitrogen-containing 5-membered ring compounds, nitrates, nitrites, nitro compounds, nitroso compounds, nitrosyl compounds, and polymers containing nitrogen.

Among these, examples of the inorganic nitrogen compounds include ammonia, ammonium salts, hydrazine, and hydrazinium salts.

The amine compounds are compounds having amino groups in the molecule, and examples thereof include methylamine, ethylenediamine, triethanolamine, monoethanolamine, methyldiethanolamine, aniline, and pyridine.

The amide compounds are compounds having amide groups in the molecule, and examples thereof include formamide, dimethylformamide and urea.

Examples of the amino acid compounds include glycine, aspartic acid, phenylalanine, and tryptophan.

Examples of the nitrogen-containing 5-membered ring compounds include N-methylpyrrolidone, pyrrole, imidazole, pyrazole, thiazole, oxazole, furazan, and derivatives thereof. Among these, particularly imidazolidinone-based nitrogen-containing compounds such as DMI (1,3-dimethyl-2-imidazolidinone) are widely used as aprotic polar solvents, and the present invention is also suitable for such treatment of nitrogen compounds.

The nitrogen-containing compound may be insoluble or poorly soluble in water, but a nitrogen-containing compound which is soluble in water is preferred. In the case of treating a nitrogen-containing compound which is insoluble or poorly soluble in water, it is preferable that the nitrogen-containing compound be in a state of suspension in water, from the viewpoint of handling during the treatment. The nitrogen-containing compound in the waste water may exist as a single compound, or may exist as mixtures of plural compounds.

The total nitrogen concentration in the waste water to be treated by the catalyst of the present invention is not particularly limited, but a concentration of equal to or greater than 10 mg/liter and equal to or less than 6000 mg/liter is effective, and the concentration is preferably equal to or greater than 50 mg/liter and equal to or less than 5000 mg/liter. If the total nitrogen concentration is less than 10 mg/liter, the advantage in terms of cost of the catalytic wet oxidation treatment may not be sufficiently obtained. On the other hand, if the concentration exceeds 6000 mg/liter, since the total nitrogen concentration is too high, sufficient treatment performance may not be obtained.

The waste water may also contain components other than the nitrogen-containing compound, for example, components such as COD components. The content of the other components is not particularly limited as long as the content is in a range that does not impede the wet oxidation reaction described in the present application.

According to the method, nitrogen-containing compounds are converted to ammoniacal nitrogen by the catalyst disposed on the upstream (pre-catalyst) in the flow direction of the waste water, and further the waste water containing the ammoniacal nitrogen is treated by the catalyst disposed on the downstream (post-catalyst). The ammoniacal nitrogen is a compound containing ammoniacal nitrogen, and examples thereof include ammonia, ammonium salts, hydrazine, and hydrazinium salts, while a preferred example is ammonia. The ammoniacal nitrogen is a product converted from the nitrogen-containing compound by the pre-catalyst, and the ammoniacal nitrogen is treated to be converted into nitrogen and water by the post-catalyst. The ammoniacal nitrogen concentration in the ammoniacal nitrogen-containing waste water that is post-treated varies depending on the conversion ratio of the nitrogen-containing compound by the pre-catalyst, but the concentration is preferably 10 mg/liter to 6000 mg/liter, more preferably 30 mg/liter to 5000 mg/liter, and particularly preferably 50 mg/liter to 4000 mg/liter.

The oxidizing agent described in the present application may be any oxidizing agent capable of oxidizing the substances to be oxidized in the waste water, and examples thereof include a gas containing oxygen and/or ozone, and hydrogen peroxide. When a gas is used, generally air is used; however, in addition to that, an oxygen-containing exhaust gas generated from other plants can also be conveniently used. Among these, since hydrogen peroxide has strong oxidizability, and can be supplied in the form of liquid as aqueous hydrogen peroxide; hydrogen peroxide is suitable for an oxidation reaction which is carried out in liquid phase. The substances to be oxidized are nitrogen-containing compounds, ammoniacal nitrogen, and COD components.

According to the present application, when a necessary amount of the oxidizing agent is contained in the waste water, it is not necessary to supply the oxidizing agent to the waste water; however, if a necessary amount is not contained, the oxidizing agent is supplied to the waste water. The way to supply is not particularly limited, and for example, all the oxidizing agent may be supplied from the front of the catalyst layer, or the agent may also be supplied in divided portions. When the oxidizing agent is supplied in divided portions, for example, the oxidizing agent may be supplied from several sites along the flow direction in the catalyst layer inside the column reactor. However, it is preferable to provide plural stages of catalyst layers to contact the waste water and the oxidizing agent with a solid catalyst, and to add the oxidizing agent to each of the plural stages . The number of layer inside the column reactor is not limited, then and plural stages of catalyst layers may be provided in one column reactor, or plural column reactors may be provided, with a catalyst layer being provided in each of the column reactors. It is preferable to use the catalyst layers by packing each of the catalyst layers with one catalyst.

The oxidizing agent described in the present application may be any agent that is capable of oxidizing the substances to be oxidized in the waste water, and examples thereof include a gas containing oxygen and/or ozone, and hydrogen peroxide. In the case of using a gas, generally, the gas is preferably air. In addition to that, an oxygen-containing exhaust gas generated from other plants can also be conveniently used. The substances to be oxidized are organic compounds, nitrogen compounds and sulfur compounds.

The amount of the oxidizing agent included in the waste water is appropriately selected with respect to the amount of the substances to be oxidized in the waste water, but preferably, the amount is 0.4 times to 10.0 times, preferably 0.5 times to 5.0 times, or 0.7 times to 5.0 times, and more preferably 1.0 times to 4.0 times, the molar amount of the theoretical oxygen demand of the substances to be oxidized. It is because, if the amount of the oxidizing agent is less than 0.4 times by mole, the hazardous materials in the waste water may not be sufficiently degraded, and if the amount exceeds 10.0 times by mole, the amount will cause only an increase in the size of the facilities. The term "theoretical oxygen demand" is an amount of oxygen required to oxidize and/or degrade the substances to be oxidized, such as the nitrogen-containing compounds in the waste water, into nitrogen, carbon dioxide, water, and ashes such as sulfates. When substances to be oxidized other than the nitrogen-containing compounds are included in the waste water, the theoretical oxygen demand is determined by including these substances in the calculation.

The present application describes the use of at least two kinds of solid catalysts having different compositions, namely, a pre-catalyst and a post-catalyst, in combination so as to purify nitrogen-containing compounds in waste water with higher purification performance than in the case of treating the waste water with each of the catalysts singly, and to thereby make the waste water innocuous. Specifically, the use of a catalyst having high durability on the upstream side in the flow direction of the waste water, and a catalyst having high activity on the downstream side is described. In regard to the use, while one kind for each of the pre-catalyst and the post-catalyst is used, plural kinds of the pre-catalyst and the post-catalyst can also be used.

However, as more kinds of catalysts having the functions described above are used, the production cost for catalysts increases, and it is often economically disadvantageous. Therefore, it is preferable to use no more than 5 kinds of catalysts, and more preferably no more than 4 kinds of catalysts . In the case of using three or more of solid catalysts in combination, plural kinds of the pre-catalyst and plural kinds of the post-catalyst can be used in an arbitrary combination, as long as the order of the pre-catalyst and the post-catalyst in the flow direction of the waste water is not reversed.

There are no particular limitations on the catalyst on the upstream in the flow direction of the waste water (pre-catalyst). Preferred examples of the pre-catalyst include: (i) it is effective to use a catalyst containing at least one element selected from the group consisting of non-noble metallic components such as titanium, iron, lanthanum, manganese, zirconium, cobalt, tin, tungsten, yttrium, indium, tantalum, bismuth, nickel, cerium, zinc and niobium, and/or a compound thereof, and preferably, a catalyst containing at least one element selected from titanium, iron, lanthanum, manganese, zirconium, yttrium, cerium and zinc, and/or a compound thereof; (ii) the first catalyst for waste water treatment; (iii) a catalyst containing oxides or a composite oxide of at least two selected from the group consisting of titanium, iron, zirconium, cobalt, nickel, cerium, lanthanum, manganese, yttrium, indium, zinc and bismuth, as a component A', and at least one selected from the group consisting of silver, platinum, palladium, ruthenium, rhodium, iridium and gold as a component B' (hereinafter, also referred to as "catalyst of (iii)"); and (iv) a catalyst formed by coating a porous inorganic oxide with a noble metal and an activating aid (hereinafter, also referred to as "catalyst of (iv)"). Among these, the catalysts of (i), (iii) and (iv) are preferably used. Among the catalysts of (i), a catalyst containing at least one element of titanium, iron, lanthanum, zirconium, yttrium and cerium, and/or a compound thereof is preferably used. Such a pre-catalyst can convert 90% or more of the nitrogen-containing compounds in the waste water into nitrogen gas and/or ammoniacal nitrogen. The pre-catalyst may be used singly, or may be used in the form of a mixture of two or more. There are no particular limitations on the form of the compounds of the non-noble metallic component as the pre-catalyst. Specific examples thereof include a simple non-metal substance, and oxides such as titania, iron oxide (Fe₂O₃), lanthanum oxide, zirconia, yttria, and ceria. Among these, the non-noble metallic component is preferably used in the form of an oxide. In this regard, when lanthanum or yttrium, and/or compounds thereof are incorporated into a catalyst, thermal stability is enhanced, and the specific surface area can be stabilized. The content of lanthanum or yttrium, and/or compounds thereof in the pre-catalyst may be appropriately set, but usually, the content may be, in terms of oxide, 20% by mass or less, and preferably 5% to 10%. Meanwhile, since the catalyst of (iii) and the catalyst of (iv) are the same as the catalyst of (I) and the catalyst (II), respectively, further description will not be repeated herein.

Furthermore, there are no particular limitations on the catalyst on the downstream side in the flow direction of the waste water (post-catalyst). Preferred examples of the post-catalyst include: (a) a catalyst containing an oxide of at least one element selected from the group consisting of titanium, iron, lanthanum, manganese, zirconium, cobalt, tin, tungsten, yttrium, tantalum, bismuth, nickel, cerium, zinc and niobium as a component A", and the metal of at least one element selected from platinum, palladium, ruthenium, rhodium, gold, silver and iridium, and/or an oxide thereof as a component B"; (b) the first catalyst for waste water treatment; (C) a catalyst containing oxides or a composite oxide thereof of at least two selected from the group consisting of titanium, iron, zirconium, cobalt, nickel, cerium, lanthanum, manganese, yttrium, indium, zinc and bismuth, as a component A', and at least one selected from the group consisting of silver, platinum, palladium, ruthenium, rhodium, iridium and gold as a component B' (hereinafter, also referred to as "catalyst of (c)"); and (d) a catalyst formed by coating a porous inorganic oxide with a noble metal and an activating aid (hereinafter, also referred to as "catalyst of
(d)"). Among these, the catalysts of (a) and (b) are preferably used. In the catalyst (a), the proportion of the catalyst component B" in the solid catalyst is preferably set to 0.05% to 10% by mass. Even if the component B" is used at a proportion of greater than 10% by mass, an enhancement of the treatment performance corresponding to such an increase of the proportion is not recognized. Rather, since the raw materials are expensive, the cost of the solid catalyst increases, and it is economically disadvantageous. Meanwhile, since the catalyst of (c) and the catalyst of (d) are the same as the catalyst of (I) and the catalyst of (II), respectively, further description will not be repeated herein.

The method for preparing the catalyst may be any of those methods for preparing a catalyst that is conventionally used in a wet oxidation treatment. However, preferably the following method can be adopted: (1) a method of adding water-soluble salts of the individual components to water, mixing the components, adjusting the pH with ammonia or a hydroxide, and co-precipitating the components; (2) a supporting method of supporting other components on an oxide or the like; (3) a mixing method of mixing solids such as the oxides of individual components; and the like can be adopted. A preferred method for the pre-catalyst is a method of co-precipitating the individual components, and a preferred method for the post-catalyst is a supporting method.

There are no particular limitations on the shape of the respective catalysts, and for example, the shape may be any of particle shape, spherical shape, pellet shape, fracture shape, saddle shape, honeycomb shape and ring shape. In the case of pellet shape, a catalyst having any arbitrary morphology whose cross-section is circular, elliptic, polygonal, trefoil, quatrefoil or the like, can be used.

In regard to the arrangement of the catalysts, at least two kinds of catalysts having different compositions are used with arranged in the flow direction of the waste water from the upstream side toward the downstream side. However, between the two adjacent catalysts, when the volume occupied by the catalyst closer to the upstream side (pre-catalyst) is represented by V1, and the volume occupied by the catalyst closer to the downstream (post-catalyst) is represented by V2, it is effective to pack the catalysts such that the ratio of the volumes occupied by these two adjacent catalysts, V1/V2, is 20/1 to 1/5. It is more effective if the ratio of the volumes occupied by these two adjacent catalysts, V1/V2, is 15/1 to 1/3, even more effectively 10/1 to 1/2, and particularly preferably 10/1 to 2/1. If the ratio of the volumes occupied, V1/V2, is larger than 20/1, the effect of the method for treating waste water according to the present application is small, and the results of the method are not much different from the results obtained by treating waste water with one kind of catalyst. If the ratio is smaller than 1/5, the amount of the post-catalyst containing a noble metal component increases, and the catalyst cost increases, then it is economically disadvantageous.

The method is to carry out the treatment in a temperature range of equal to or higher than 100°C and lower than 370°C. If the treatment temperature is lower than 100°C, it may become difficult to efficiently carry out the oxidation/degradation treatment of nitrogen-containing compounds. The treatment temperature is preferably set to a temperature of 110°C or higher, more preferably higher than 120°C, even more preferably a temperature of higher than 130°C, and still more preferably a temperature of higher than 140°C. Meanwhile, if the treatment temperature is 370°C or higher, the waste water cannot maintain the liquid phase, which is not preferable. If the treatment temperature is elevated, the operating cost required for heating increases. Therefore, preferably, the treatment temperature may be set to a temperature of 280°C or lower, more preferably 270°C or lower, even more preferably 260°C or lower, still more preferably 250°C or lower, even more preferably 240°C or lower, still more preferably 230°C lower, and even more preferably 170°C or lower.

On the other hand, the treatment pressure may be any pressure as long as the waste water can retain the liquid phase at the treatment temperature, and there are no particular limitations. The treatment pressure may be different in each of the catalyst layers. Also, the adjustment of the treatment pressure is not particularly limited, and the pressure can be adjusted according to a known method. For example, it is preferable to provide a pressure control valve on the exhaust gas outlet side of the wet oxidation treatment apparatus, and to thereby appropriately adjust the pressure in accordance with the treatment temperature so that the waste water can retain the liquid phase inside the column reactor. Here, the treatment pressure is such that, for example, when the treatment temperature is equal to or higher than 80°C and lower than 95°C, the waste water is in the liquid phase state even under the atmospheric pressure. From the viewpoint of economic efficiency, the treatment pressure may be the atmospheric pressure, but it is preferable to apply pressure in order to enhance the treatment efficiency. When the treatment temperature is 95°C or higher, the waste water vaporizes under the atmospheric pressure in many cases. Therefore, it is preferable to control the pressure such that the waste water can retain the liquid phase, by applying a pressure of about 0.2 MPa to 1 MPa (gauge) when the treatment temperature is equal to or higher than 95°C and lower than 170°C; a pressure of about 1 MPa to 5 MPa (gauge) when the treatment temperature is equal to or higher than 170°C and lower than 230°C; and a pressure of greater than 5 MPa (gauge) when the treatment temperature is 230°C or higher. In order to enhance the treatment performance and the durability of the catalyst, it is preferable to control the fluctuation of this treatment pressure to ±20% or less, more preferably ±10% or less, and even more preferably ±5% or less.

The spatial velocity of the waste water in the catalyst layer is not particularly limited, but usually, it is preferable to adjust the spatial velocity in each of the catalyst layers to 0.1 hr⁻¹ to 10 hr⁻¹, more preferably 0.2 hr⁻¹ to 5 hr⁻¹, and even more preferably 0.3 hr⁻¹ to 3 hr⁻¹. If the spatial velocity is less than 0.1 hr⁻¹, the throughput of the waste water is decreased, and excessive facilities will be required. On the other hand, if the spatial velocity is greater than 10 hr⁻¹, it is difficult to efficiently carry out the oxidation/degradation treatment of nitrogen-containing compounds.

In the present invention, the amount of the oxidizing agent supplied is not particularly limited, and it is desirable to supply the oxidizing agent in an amount required to degrade and eliminate hazardous substances in the waste water. When the oxidizing agent is a gas, the amount supplied to the waste water can be appropriately regulated by, for example, providing an oxygen-containing gas flow rate regulating valve on the oxygen-containing gas supply line. As the amount of supply of the oxidizing agent, it is recommended that the amount of supply be an amount corresponding to an oxygen content of preferably 0.4 times or greater, more preferably 0.5 times or greater, and even more preferably 0.7 times or greater, the molar amount of the theoretical oxygen supply for the substances to be oxidized in the waste water, and an oxygen content of preferably 10.0 times or less, more preferably 5.0 times or less, and even more preferably 3.0 times or less, the molar amount of the theoretical oxygen supply. If the amount of the oxidizing agent supplied is less than 0.4 times by mole, the hazardous substances in the waste water may not be sufficiently degraded in many cases, and a relatively large amount of the hazardous substances may remain in the liquid obtained after the wet oxidation treatment. Even if the oxidizing agent is supplied in an amount of greater than 10.0 times by mole, the treatment performance may not be enhanced only by enlarging the size of the facilities in many cases. The "theoretical oxygen demand" as used herein refers to the amount of oxygen required to degrade the substances to be oxidized such as organic compounds and nitrogen compounds in the waste water, to nitrogen, carbon dioxide, water, and ashes such as sulfates. When substances to be oxidized other than nitrogen-containing compounds are included in the waste water, the theoretical oxygen demand is determined by including these substances in the calculation.

Hereinafter, the present invention will be described in more detail by the Examples, but the present invention is not intended to be limited to the following Examples, and all variations and modifications made to the extent that the purposes of the invention that have described above and that will be described below are maintained, are included in the technical scope of the present invention.

### Examples

Hereinafter, the present invention will be more specifically described by way of Catalyst Preparation Examples, Comparative Preparation Examples, Examples and Comparative Examples, but the present invention is not intended to be limited to these.

In the following Examples, the total nitrogen concentration indicates the sum of the concentrations of unreacted nitrogen-containing compounds, ammoniacal nitrogen, and nitrate nitrogen. Nitrate nitrogen is a term collectively referring to nitrogen oxide ions, and examples thereof include NO₃⁻ and NO₂⁻.

The methods for measuring the distribution and the average particle size of the component B will be described below.

### (Measurement of distribution of component B)

The proportion (mass%) of the component B present in the catalyst surface layer section which occupies from the catalyst outer surface to a depth of 1000 µm, with respect to the total amount of the catalyst, was determined by: with the catalyst cross-section, a linear analysis is performed for the amount of the component B present in the catalyst surface layer section the component B in the section from the catalyst surface to a depth of 1000 µm with respect to that in the total distribution is calculated on the basis of the area ratio.

Analysis apparatus: EPM-810 manufactured by Shimadzu Corp.
X-ray beam diameter: 1 µm
Accelerating voltage: 20 kV
Sample current: 0.1 µA
Sample scan speed: 200 µm/min

### (Measurement of average particle size of component B)

The average particle size of the component B contained in the catalyst was calculated by measuring the amount of chemisorption by the CO pulse method of a TPD analysis.

Analysis apparatus: Catalyst analysis apparatus manufactured by BEL Japan, Inc., BEL-CAT
Analysis method: TPD (temperature programmed desorption)
Carrier gas: Helium
Detector: TCD (thermal conductive type detector)
Pretreatment temperature/time: 300°C × 15 minutes (hydrogen atmosphere)
CO adsorption temperature: 100°C

### (Measurement of solid acid content)

The solid acid content was determined by a gaseous base adsorption method. Ammonia was used as the base.

Analysis apparatus: Catalyst analysis apparatus manufactured by BEL Japan, Inc., BEL-CAT
Analysis method: TPD (temperature programmed desorption)
Carrier gas: Helium
Detector: TCD (thermal conductive type detector)
Pretreatment temperature/time: 200°C × 2 hours
Ammonia adsorption temperature: 100°C
Temperature increase range: From 100°C to 700°C
Temperature increase rate: 10°C/min

### (Catalyst Preparation Example 1)

An iron oxide (Fe₂O₃)-aluminum oxide (Al₂O₃) powder prepared by a co-precipitation method was molded into a pellet shape, and platinum (Pt) was supported thereon. The average diameter of the pellet was 5 mm, the average length was 6 mm, and the specific surface area was 58 m²/g. In order to achieve high-dispersion supporting of Pt as fine particles in the surface layer section of the pellet, a liquid prepared by adding sodium carbonate to a basic aqueous solution of a platinum complex was sprayed while the pellets were constantly moved, to thereby support Pt. And then, the pellets were dried for one hour while the pellets were rotated in a hot air stream at 90°C. Subsequently, the pellets were subjected to a reduction treatment using a hydrogen-containing gas for 3 hours at 300°C, and thus a catalyst (A-1) was obtained. The mass ratio of the main components of the catalyst thus obtained was Fe₂O₃: Al₂O₃: Pt = 90:9.7:0.3. The results of investigating the distribution of Pt in the catalyst A-1 (proportion of Pt present in the region extending within the depth of 1000 µm from the base material surface, with respect to the total content of Pt) by EPMA, the results of investigating the particle size of Pt by a TPD analysis, and the results of investigating the solid acid content are presented in Table 1.

### (Catalyst Preparation Examples 2 and 3)

In Catalyst Preparation Examples 2 and 3, the pellets used for the catalyst A-1 were used. In these pellets, the components indicated in Table 1 were used as the component B. Catalysts (A-2 and A-3) were prepared by the same method as that used in Catalyst Preparation Example 1, except that the component B was changed as described below. The results of investigating the distribution of the component B in the respective catalysts (proportion present in the region extending within the depth of 1000 µm from the base material surface, with respect to the total content) by EPMA, the results of investigating the particle size by a TPD analysis, and the results of investigating the solid acid content are presented in Table 1.

That is, in Catalyst Preparation Example 2, iridium (Ir) was used as the component B. A liquid prepared by mixing an aqueous solution of iridium chloride and ethanol was used for the precursor. The amount of iridium supported was 0.6% by mass.

In Catalyst Preparation Example 3, palladium (Pd) and platinum (Pt) were used as the component B. A liquid prepared by mixing a basic aqueous solution of a palladium complex and an basic aqueous solution of a platinum complex with sodium hydroxide was used for the precursor. The amounts of palladium and platinum supported were 0.5% by mass and 0.1% by mass, respectively.

### (Comparative Preparation Example 1)

The same iron oxide (Fe₂O₃)-aluminum oxide (Al₂O₃) powder as that used in Catalyst Preparation Example 1, and an aqueous solution of platinum nitrate were mixed, and the mixture was dried by evaporation to dryness in a hot air gas stream at 90°C to support 0.3% by mass of platinum. Then, the mixture was dried for 20 hours and was molded into pellet having the same shape as that used in the catalyst A-1 (average diameter 5 mm, and average length 6 mm). The pellets were subjected to a reduction treatment using a hydrogen-containing gas for 3 hours at 300°C, and thus a catalyst (A-4) was obtained. The results of investigating the distribution state of Pt (proportion present in the region extending within the depth of 1000 µm from the base material surface, with respect to the total content) by EPMA, the results of investigating the particle size of Pt by a TPD analysis, and the results of investigating the solid acid content are presented in Table 1.

### (Catalyst Preparation Examples 4 to 6)

An iron oxide (Fe₂O₃)-titanium oxide (TiO₂) powder prepared by a co-precipitation method was molded into a pellet shape, and the component B was supported thereon. The average diameter of the pellet was 5 mm, the average length was 7 mm, and the specific surface area was 48 m²/g. The component B was incorporated into a pellet by the same method as that used in Catalyst Preparation Example 1, and thus catalysts B-1 to B-3 were obtained. As the component B for the respective catalysts, palladium (Pd) was incorporated into B-1; ruthenium (Ru) was incorporated into B-2; and gold (Au) and platinum (Pt) were incorporated into B-3. (In Catalyst Preparation Example 4, a liquid prepared by adding sodium hydroxide to an aqueous solution of a basic palladium complex was used; in Catalyst Preparation Example 5, a liquid prepared by adding sodium carbonate to an aqueous solution of a basic ruthenium complex was used; and in Catalyst Preparation Example 6, a liquid prepared by mixing an aqueous solution of chloroauric acid, an aqueous solution of platinum nitrate, and ethanol was used.) The catalysts obtained after the addition of the component B were subjected to a reduction treatment using a hydrogen-containing gas for 3 hours at 300°C. The mass ratios of the main components in the respective catalysts thus obtained were Fe₂O₃:TiO₂:Pd = 84.7:14.9:0.4 (catalyst B-1), Fe₂O₃:TiO₂:Ru = 84.4:14.9:0.7 (catalyst B-2), and Fe₂O₃:TiO₂:Au:Pt = 84.5:14.9:0.4:0.2 (catalyst B-3). The results of investigating the distribution of the component B in the catalysts B-1 to B-3 (proportion present in the region extending within the depth of 1000 µm from the base material surface, with respect to the total content) by EPMA, the results of investigating the particle size by a TPD analysis, and the results of investigating the solid acid content are presented in Table 2.

### (Comparative Preparation Example 2)

The same iron oxide (Fe₂O₃)-titanium oxide (TiO₂) powder as that used in Catalyst Preparation Examples 4 to 6, and a commercially available ruthenium oxide (RuO₂) powder were mixed, and the mixture was molded into a pellet having the same shape as that of the catalyst B-1 (average diameter 5 mm, and average length 7 mm). The pellets were subjected to a reduction treatment using a hydrogen-containing gas for 3 hours at 300°C, and thus a catalyst B-4 was obtained. The mass ratio of the main components of the catalyst thus obtained was Fe₂O₃: TiO₂: Ru = 84.4:14.9:0.7. The results of investigating the distribution state of Ru in the catalyst B-4 (proportion present in the region extending within the depth of 1000 µm from the base material surface, with respect to the total content) by EPMA, the results of investigating the particle size of Ru by a TPD analysis, and the results of investigating the solid acid content are presented in Table 2.

### (Comparative Preparation Example 3)

The same iron oxide (Fe₂O₃)-titanium oxide (TiO₂) powder as that used in Catalyst Preparation Examples 4 to 6 was calcined in air at 850°C. (The powder of Catalyst Preparation Examples 4 to 6 was calcined at 600°C.) The specific surface area of the powder was 22 m²/g, and the powder was molded into a pellet having the same shape as that of the catalyst B-1 (average diameter 5 mm, and average length 7 mm). Pd was incorporated into the pellets by the same method as that used in Catalyst Preparation Example 1, and thus a catalyst B-5 was obtained. The catalyst was subjected to a reduction treatment using a hydrogen-containing gas for 3 hours at 300°C. The mass ratio of the main components of the catalyst thus obtained was Fe₂O₃:TiO₂:Pd = 84.7:14.9:0.4. The results of investigating the distribution of Pd in the catalyst B-5 (proportion present in the region extending within the depth of 1000 µm from the base material surface, with respect to the total content) by EPMA, the results of investigating the particle size by a TPD analysis, and the results of investigating the solid acid content are presented in Table 2.

### (Catalyst Preparation Examples 7 and 8)

An iron oxide (Fe₂O₃)-cerium oxide (CeO₂) powder prepared by a co-precipitation method was molded into a pellet shape, and the component B was supported thereon. The average diameter of the pellet was 3 mm, the average length was 4 mm, and the specific surface area was 38 m²/g. The component B was incorporated into the pellets by the same method as that used in Catalyst Preparation Example 1, and thus catalysts C-1 and C-2 were obtained. As the component B of the respective catalysts, rhodium (Rh) was incorporated into C-1; and iridium (Ir) and palladium (Pd) were incorporated into C-2. (In Catalyst Preparation Example 7, a liquid prepared by mixing an aqueous solution of rhodium nitrate and ethanol was used; and in Catalyst Preparation Example 8, a liquid prepared by mixing an aqueous solution of iridium chloride, an aqueous solution of palladium nitrate, and acetone was used.) The catalysts obtained after the addition of the component B were subjected to a reduction treatment using a hydrogen-containing gas for 3 hours at 300°C. The mass ratios of the main components in the respective catalysts thus obtained were Fe₂O₃:CeO₂:Rh = 79.9:20.0:0.1 (catalyst C-1), and Fe₂O₃:CeO₂:Ir:Pd = 79.4:19.9:0.4:0.3 (catalyst C-2). The results of investigating the distribution state of the component B in the catalysts C-1 and C-2 (proportion present in the region extending within the depth of 1000 µm from the base material surface, with respect to the total content) by EPMA, the results of investigating the particle size by a TPD analysis, and the results of investigating the solid acid content are presented in Table 3.

### (Comparative Preparation Example 4)

Commercially available powders of iron oxide (Fe₂O₃) and cerium oxide (CeO₂) were mixed, and the mixture was molded into a pellet shape. The average diameter of the pellet was 3 mm, the average length was 4 mm, and the specific surface area was 25 m²/g. The component B was incorporated into the pellets by the same method as that used in Catalyst Preparation Example 1, and thus a catalyst C-3 was obtained. Rhodium (Rh) was incorporated as the catalyst component B. (A liquid prepared by mixing an aqueous solution of rhodium nitrate and ethanol was used.) The catalyst obtained after the addition of the component B was subjected to a reduction treatment using a hydrogen-containing gas for 3 hours at 300°C. The mass ratio of the main components of the catalyst thus obtained was Fe₂O₃:CeO₂:Rh = 79.9:20.0:0.1. The results of investigating the distribution of the component B (proportion present in the region extending within the depth of 1000 µm from the base material surface, with respect to the total content) by EPMA, the results of investigating the particle size by a TPD analysis, and the results of investigating the solid acid content are presented in Table 3.

**[Table 1]**

| Catalyst | Component B | Distribution proportion of component B | Particle size of component B | Solid acid content |
|---|---|---|---|---|
| A-1 | Pt | 95 mass% | 6.1 nm | 0.27 mmol/g |
| A-2 | Ir | 92 mass% | 10.9 nm | 0.26 mmol/g |
| A-3 | Pd, Pt | 84 mass% | 13.3 nm | 0.26 mmol/g |
| A-4 | Pt | 22 mass% | 5.3 nm | 0.25 mmol/g |

**[Table 2]**

| Catalyst | Component B | Distribution proportion of component B | Particle size of component B | Solid acid content |
|---|---|---|---|---|
| B-1 | Pd | 91 mass% | 5.8 nm | 0.33 mmol/g |
| B-2 | Ru | 94 mass% | 11.2 nm | 0.33 mmol/g |
| B-3 | Au, Pt | 81 mass% | 14.1 nm | 0.32 mmol/g |
| B-4 | Ru | 29 mass% | 38 nm | 0.32 mmol/g |
| B-5 | Pd | 90 mass% | 6.5 nm | 0.17 mmol/g |

**[Table 3]**

| Catalyst | Component B | Distribution proportion of component B | Particle size of component B | Solid acid content |
|---|---|---|---|---|
| C-1 | Rh | 91 mass% | 5.2 nm | 0.29 mmol/g |
| C-2 | Ir, Pd | 94 mass% | 13.9 nm | 0.29 mmol/g |
| C-3 | Rh | 86 mass% | 6.5 nm | 0.12 mmol/g |

### (Example 1-1)

A treatment was carried out for 1000 hours under the conditions described below, using the apparatus shown in FIG. 1. 1.0 liter of the catalyst (A-1) was packed in the inside of column reactor 1 (cylindrical shape with a diameter of 26 mm and a length of 3000 mm). The waste water subjected to the treatment was a waste water containing alcohols and the like that had been discharged from a chemical plant, and the COD (Cr) was 22 g/liter. This waste water did not contain any catalyst poisoning material.

The waste water was supplied to waste water supply pump 5 through waste water supply line 6, and was fed with a pressure applied at flow rate of 2 liters/h. Subsequently, the waste water was heated to 230°C at heater 3, and was supplied through the bottom of the column reactor 1. Through oxygen-containing gas supply line 10, the air pressurized in compressor 9 was supplied, while the flow rate was regulated with oxygen-containing gas flow rate regulating valve 11 so as to obtain a flow rate of 160 liters (N: standard state)/h. The treatment was carried out in the column reactor 1 by gas-liquid cocurrent upward flow. In the column reactor 1, the temperature of the waste water was maintained at 230°C using electric heater 2, and the oxidation/degradation treatment was carried out. The treated liquid thus obtained was sent to gas-liquid separator 13 through treated liquid line 12, and a gas-liquid separation was carried out. In the gas-liquid separator 13, the liquid surface was detected with the liquid surface controller LC, and the treated liquid was discharged through liquid surface control valve 15 so as to retain a constant liquid surface. Pressure control valve 14 detected the pressure with a pressure controller PC, and controlled the pressure so as to retain the pressure at 5 MPa (gauge). The treatment results of the waste water thus obtained are presented in Table 4.

### (Examples 1-2 to 1-3 and Comparative Example 1-1)

The waste water treatment was carried out by the same method as that used in Example 1-1, except that the catalyst was changed to the catalysts A-2 to A-4, respectively. The results are presented in Table 4.

### (Example 1-4)

A waste water discharged from a photographic treatment facility was treated using the same apparatus as that used in Example 1-1 and using the catalyst B-1. In regard to the nature of the waste water, the COD (Cr) was 30 g/liter, and the waste water contained 150 mg/liter of phosphorus. An aqueous solution of sodium hydroxide was supplied by alkali supply pump 7 through alkali supply line 8, such that the molar ratio of sodium/phosphorus was 3. The pH of the waste water obtained after the addition of sodium hydroxide was 8.5. The treatment was carried out by the same method as that used in Example 1-1, except that the amount of the waste water supplied was set to 1.5 liters/h, and the amount of air supplied was set to 165 liters (N)/h. The results are presented in Table 5.

### (Examples 1-5 to 1-6 and Comparative Examples 1-2 to 1-3)

The same waste water treatment was carried out by the same method as that used in Example 1-4, except that the catalyst was changed to the catalysts B-2 to B-5, respectively. The results are presented in Table 5.

### (Examples 1-7 to 1-9)

The same waste water treatment was carried out by the same method as that used in Example 1-4, except that the catalysts B-1 to B-3 were used respectively, and an aqueous solution of sodium hydroxide was not added. The pH of the waste water was 4.6. The results are presented in Table 5.

### (Examples 1-10 to 1-11 and Comparative Example 1-4)

The treatment of a waste water discharged from a chemical plant was carried out using the same apparatus as that used in Example 1-1 and using the catalysts C-1 to C-3. The waste water contained sodium acetate and the like, and the nature of the waste water was that: the COD (Cr) was 18 g/liter; and the waste water contained 105 mg/liter of phosphorus, and 63 mg/liter of silicon. The waste water contained sodium, and thus the molar ratio of sodium/phosphorus was 3.5. The same treatment was carried out by the same method as that used in Example 1-1, except that the amount of the waste water supplied was set to 1.5 liters/h, and the amount of air supplied was set to 100 liters (N)/h. The results are presented in Table 6.

### (Examples 1-12 to 1-13)

The treatment of waste water was carried out using the same apparatus as that used in Example 1-1 and using the catalysts C-1 and C-2. The treatment of a waste water containing ammonia as a main component was carried out. In the waste water, the ammoniacal nitrogen concentration was 3.0 g/liter, and the total nitrogen concentration was 3.3 g/liter. The waste water contained 280 mg/liter of phosphorus. The treatment was carried out by supplying an aqueous solution of potassium hydroxide by the alkali supply pump 7 through the alkali supply line 8 such that the molar ratio of potassium/phosphorus was 3.0. The pH of the waste water after the addition of potassium hydroxide was 9.0. The same treatment was carried out by the same method as that used in Example 1-1, except that the amount of the waste water supplied was 2.0 liters/h, and the amount of air supplied was 35 liters (N)/h. The results are presented in Table 7.

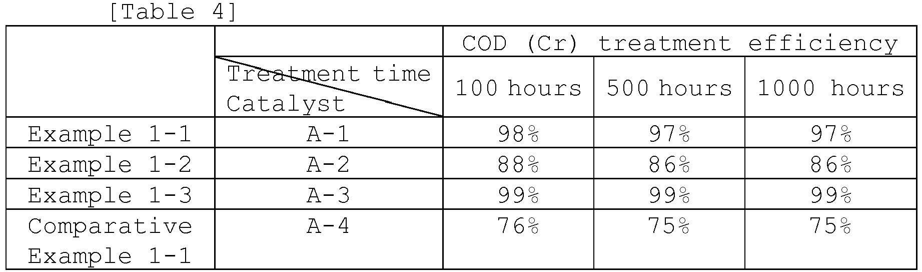

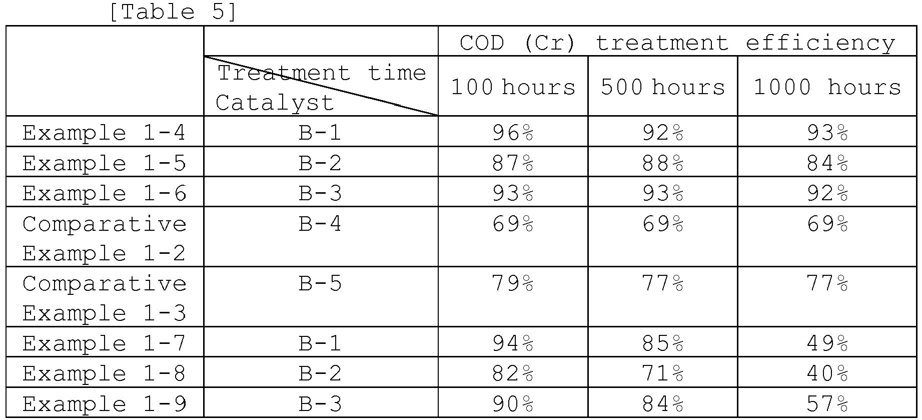

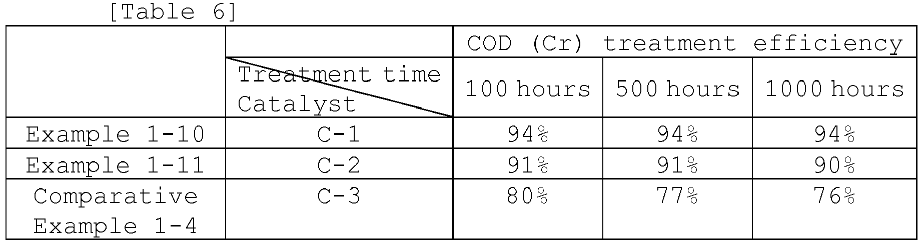

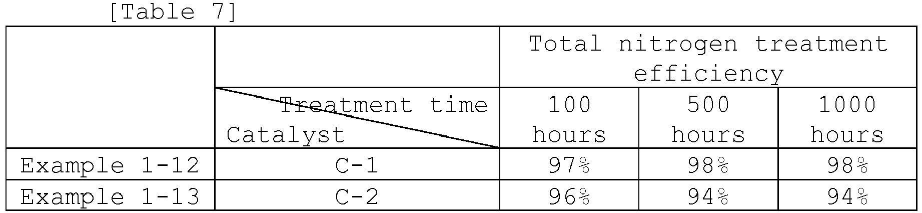

### (Example 2-1)

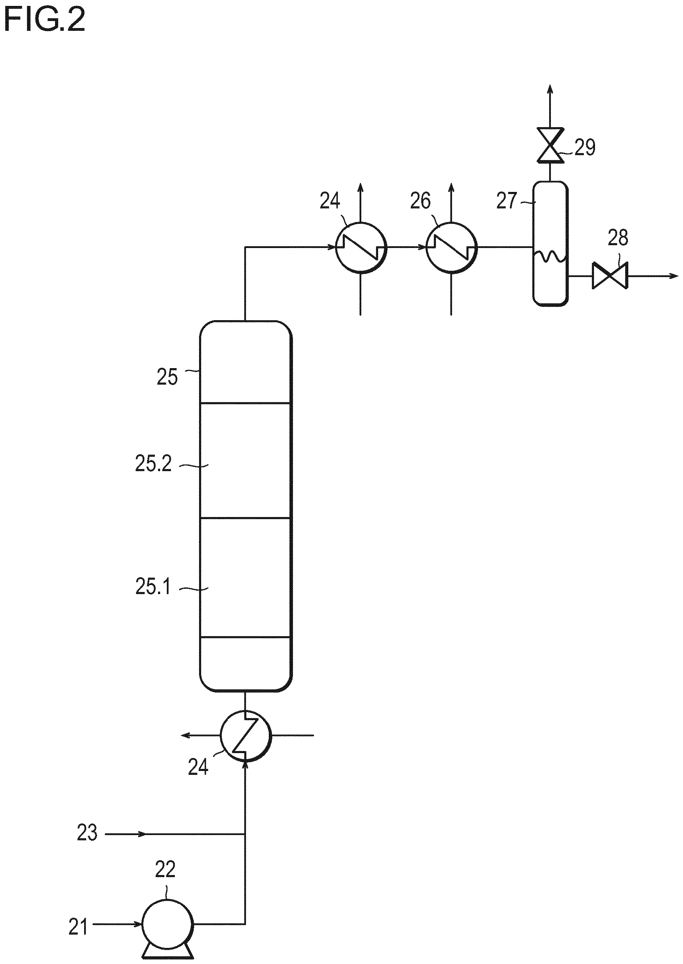

The treatment apparatus shown in FIG. 2 was used, 1.2 liters of the catalysts described below were packed in the column reactor 25, and the treatment was carried out continuously for 1000 hours under the treatment conditions described below. The experiment method and the results will be described in detail below. Here, two kinds of catalysts were used, and the catalyst on the upstream side in the flow direction of the waste water was provided as a pre-catalyst, and the catalyst on the downstream side was provided as a post-catalyst.

As the pre-catalyst, 1 liter of a catalyst containing titania and iron oxide as main components (mass ratio of titania:iron oxide = 25:75) was used. As the method for preparing the catalyst, co-precipitation method was used.

As the post-catalyst, 0.2 liters of a catalyst containing titania as a main component of the base material and containing 0.6% by mass of ruthenium was used.

The COD (Cr) concentration of the waste water subjected to the treatment was 24 g/liter, the monoethanolamine was 17.6 g/liter, and the total nitrogen concentration was 4 g/liter.

The waste water was fed with a pressure applied, by waste water supply pump 22 through a waste water supply line 21 at a flow rate of 1 liter/hr. On the other hand, through oxidizing agent supply line 23, air that had been pressurized in the compressor was supplied at a flow rate of 110 liters (N)/hr. This gas-liquid mixture was heated with heat exchanger 24, and then the gas-liquid mixture was introduced into column reactor 25 that was packed with the catalysts, and was subjected to the wet oxidation treatment at a treatment temperature of 240°C. The liquid to be treated was cooled by the heat exchanger 24 and cooler 26, and then was introduced into gas-liquid separator 27. In the gas-liquid separator 27, the liquid surface was detected by a liquid surface controller (LC), and liquid surface control valve 28 was operated to retain a constant liquid surface. At the same time, the pressure was detected by a pressure controller (PC), and pressure control valve 29 was operated so as to retain a pressure of 7.0 MPa (gauge).

The COD (Cr) concentration of the treated liquid which was obtained after 50 hours was 50 mg/liter, and the total nitrogen concentration was 130 mg/liter. Thereafter, the treatment was continued from the start to 1000 hours past, but decrease in the treatment performance was not recognized particularly. The COD (Cr) concentration of the liquid treated and obtained after lapse of 1000 hours was 64 mg/liter, and the total nitrogen concentration was 114 mg/liter.

### (Example 2-2)

As the pre-catalyst, 1 liter of a catalyst containing cerium, zirconia and iron oxide as main components (mass ratio of cerium:zirconia:iron oxide = 8:20:72) was used. The catalyst was prepared by co-precipitation method. As the post-catalyst, 0.2 liters of a catalyst containing titania as a main component of the base material and containing 0.2% by mass of platinum was used.

The waste water subjected to the treatment had a COD (Cr) concentration of 24 g/liter, and N-methylpyrrolidone was 13.8 g/liter, while the total nitrogen concentration was 2 g/liter.

The treatment of the waste water was carried out using the same apparatus as that used in Example 2-1. The waste water was fed with a pressure applied at a flow rate of 0.8 liters/hr, and air was supplied at a flow rate of 90 liters (N)/hr.

The COD (Cr) concentration of the treated liquid obtained after 50 hours was 95 mg/liter, and the total nitrogen concentration was 110 mg/liter. Thereafter, the treatment was continued from the start to 1000 hours past, but decrease in the treatment performance was not recognized particularly. The COD (Cr) concentration of the treated liquid after a lapse of 1000 hours was 111 mg/liter, and the total nitrogen concentration was 115 mg/liter.

### (Example 2-3)

As the pre-catalyst, 1 liter of a catalyst containing cerium, zirconia, titania and iron oxide (mass ratio of cerium:zirconia:titania:iron oxide = 5:25:40:30) was used. The catalyst was prepared by co-precipitation method. As the post-catalyst, 0.1 liters of a catalyst containing titania as a main component of the base material and containing 0.2% by mass of palladium was used. Other treatment conditions were the same as those used in Example 2-1, and the treatment of pyridine was carried out.

The waste water subjected to the treatment had a COD (Cr) concentration of 24 g/liter, and pyridine was 11.9 g/liter, while the total nitrogen concentration was 2.1 g/liter.

The treatment of the waste water was carried out with the same apparatus as that used in Example 2-1. The waste water was fed with a pressure applied at a flow rate of 0.6 liters/hr, and air was supplied at a flow rate of 70 liters (N)/hr.

The COD (Cr) concentration of the liquid treated and obtained after 50 hours was 135 mg/liter, and the total nitrogen concentration was 151 mg/liter. Thereafter, the treatment was continued from the start to 1000 hours past, but a particular decrease in the treatment performance was not recognized. The COD (Cr) concentration of the treated liquid which was obtained after a lapse of 1000 hours was 130 mg/liter, and the total nitrogen concentration was 143 mg/liter.

### (Examples 2 to 4)

As the pre-catalyst, 1 liter of a catalyst containing cerium, zirconia, iron oxide and yttria (mass ratio of cerium: zirconia: iron oxide:yttria = 25:10:60:5) was used. The catalyst was prepared by co-precipitation method. As the post-catalyst, 0.2 liters of the same catalyst as that used in Example 2-1 was used.

A main component of the actual waste water subjected to the treatment is triethanolamine, and the COD (Cr) concentration was 32 g/liter, while the total nitrogen concentration was 2 g/liter.

The treatment of the waste water was carried out with the same apparatus as that used in Example 2-1. The waste water was fed with a pressure applied at a flow rate of 1 liter/hr, and air was supplied at a flow rate of 140 liters (N)/hr.

The COD (Cr) concentration of the liquid treated and obtained after 50 hours was 73 mg/liter, and the total nitrogen concentration was 86 mg/liter. Thereafter, the treatment was continued from the start to 1000 hours past, but decrease in the treatment performance was not recognized particularly. The COD (Cr) concentration of the treated liquid after a lapse of 1000 hours was 81 mg/liter, and the total nitrogen concentration was 91 mg/liter.

### (Examples 2-5 to 2-19)

In order to carry out the present invention, a large amount of time and large-sized facilities are required. Therefore, as a means for conveniently exhibiting the effect of the present invention, a pre-catalyst was prepared, and a treatment test using only the pre-catalyst was carried out by the following procedure. pre-catalysts containing various non-noble metallic components according to the present invention were prepared by co-precipitation method. The compositions are presented in Table 8. When the pre-catalyst is used in combination with a post-catalyst during the waste water treatment, the effect of the present invention can be obtained.

**[Table 8]**

| | Fe₂O₃ | TiO₂ | CeO₂ | ZrO₂ | La₂O₃ | Y₂O₃ | MnO₂ | ZnO | In₂O₃ | Co₃O₄ | Nb₂O₅ | Bi₂O₃ | NiO |
|---|---|---|---|---|---|---|---|---|---|---|---|---|---|
| | (mass%) | | | | | | | | | | | | |
| Example 2-5 | 90 | 10 | | | | | | | | | | | |
| Example 2-6 | 86 | 9 | 5 | | | | | | | | | | |
| Example 2-7 | 86 | 9 | | | | | | 5 | | | | | |
| Example 2-8 | 86 | 9 | | | | | 5 | | | | | | |
| Example 2-9 | 86 | 9 | | | | | | | 5 | | | | |
| Example 2-10 | 86 | 9 | | | | | | | | | | | 5 |
| Example 2-11 | 86 | 9 | | | 5 | | | | | | | | |
| Example 2-12 | 86 | 9 | | | | 5 | | | | | | | |
| Example 2-13 | 86 | 9 | | | | | | | | | 5 | | |
| Example 2-14 | 30 | 40 | 5 | 25 | | | | | | | | | |
| Comparative Example 2-15 | | 50 | 30 | 5 | | | | | | 15 | | | |
| Example 2-16 | 25 | | 30 | 37 | 4 | 4 | | | | | | | |
| Example 2-17 | 10 | | 60 | | | | | 30 | | | | | |
| Example 2-18 | 45 | 5 | 29 | 7 | | | | | | | | 14 | |
| Example 2-19 | 2 | 60 | 13 | 25 | | | | | | | | | |

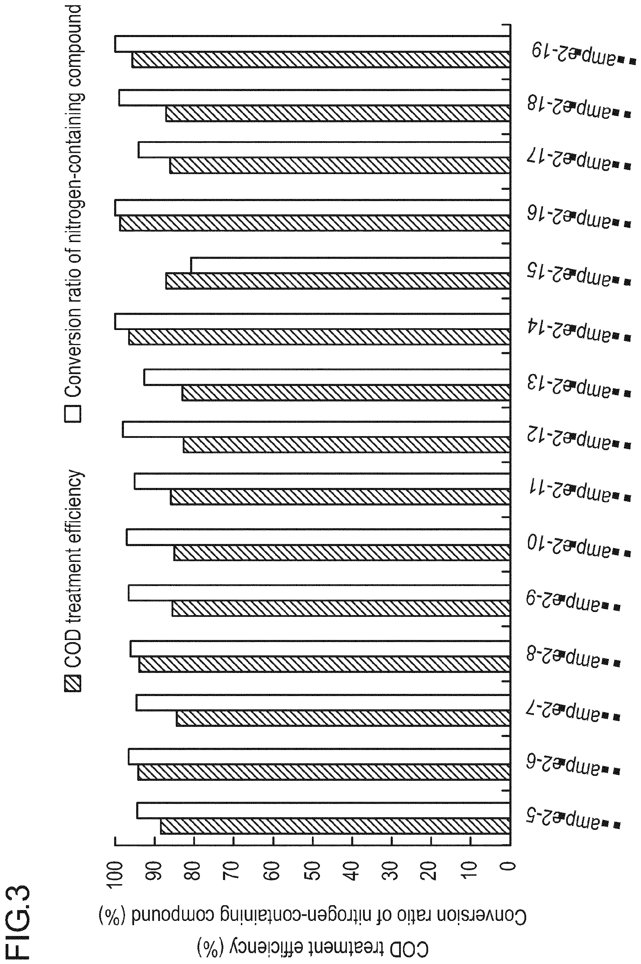

As for the pre-catalysts, a treatment test for a monoethanolamine-containing waste water, was performed by using an autoclave having a capacity of 1 liter. The treated solution had a COD (Cr) concentration of 12 g/liter, and contained 8.8 g/liter of monoethanolamine. The total nitrogen concentration was 2 g/liter. The catalyst was used in an amount of 20 g. The wet oxidation treatment was carried out using 0.25 liters of the waste water, at a treatment temperature of 250°C for 3 hours, by introducing air so as to obtain a reaction pressure of 7.4 MPa (gauge). The results were obtained as described in FIG. 3.

### (Comparative Example 2-1)

A column reactor was packed only with 1.2 liters of a catalyst which contained titania as a main component of the base material and contained 0.6% by mass of ruthenium. Other than that, the treatment was carried out under the same conditions as those used in Example 2-1. That is, only the post-catalyst used in Example 2-1 was used in an amount of 1.2 liters.

The COD (Cr) concentration of the treated liquid which was obtained after 50 hours was 68 mg/liter, and the total nitrogen concentration was 79 mg/liter. However, the treatment performance deteriorated thereafter, as a results, the COD (Cr) concentration of the treated liquid after 1000 hours was 1407 mg/liter, while the total nitrogen concentration was 1340 mg/liter. After completion of the treatment, the catalyst removed from the column reactor was analyzed, and it was found that the content of ruthenium had decreased to 0.12% by mass.

### (Comparative Example 2-2)

Only the pre-catalyst used in Example 2-1 was packed in a column reactor in an amount of 1.0 liter, and the treatment was carried out under the same conditions as those used in Example 2-1. The COD (Cr) concentration of the treated liquid which was obtained after 50 hours was 416 mg/liter, and the total nitrogen concentration was 3400 mg/liter. As residual nitrogen components, 3290 mg/liter of ammoniacal nitrogen and 69 mg/liter of nitrate nitrogen were present, and the conversion ratio of nitrogen-containing compounds was 98.9%.

### (Example 3-1- not according to the invention.)

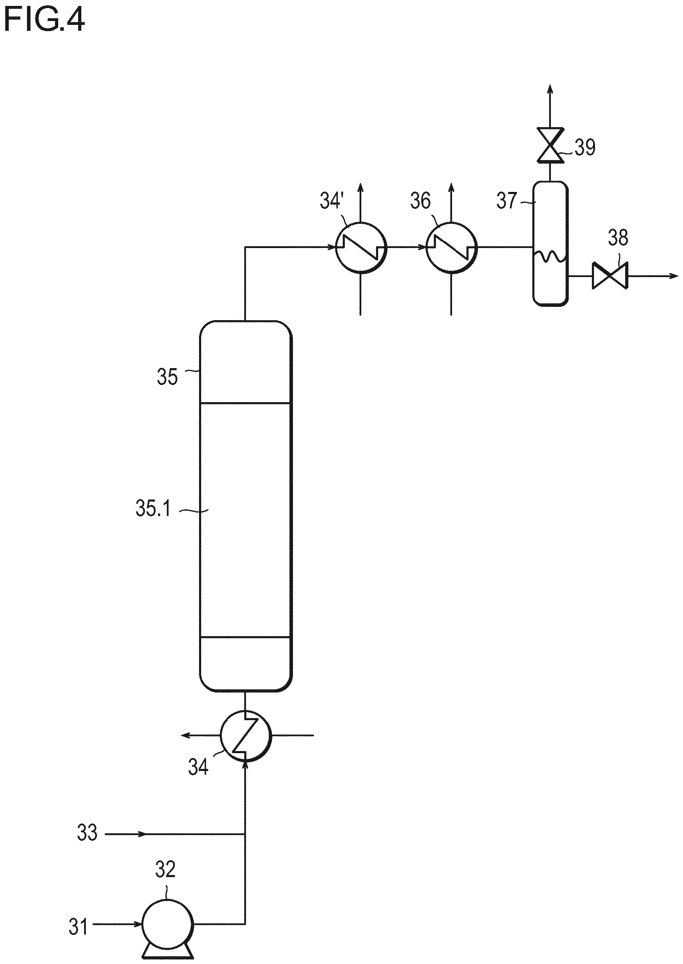

A treatment apparatus such as shown in FIG. 4 was used, its column reactor 35 was packed with 1 liter of the catalyst described below, and the treatment was continuously carried out for 1200 hours under the treatment conditions described below. The experiment method and results will be described in detail below. One liter of a catalyst in which ruthenium was supported on a base material formed from oxides of titanium, cerium and manganese was used. The base material formed from oxides of titanium, cerium and manganese was obtained as a composite oxide, by dissolving 1300 g of titanyl sulfate as a water-soluble salt of titanium, 25 g of cerium nitrate hexahydrate as a water-soluble salt of cerium, and 50 g of manganese nitrate hexahydrate as a water-soluble salt of manganese, in 2000 g of water, adjusting the pH to 9.5 using aqueous ammonia as an alkaline substance, obtaining a precipitate, subsequently drying this precipitate for 20 hours at 150°C, and calcining the dried precipitate for 3 hours at 500°C (prepared by co-precipitation method). The composition of the base material was that the mass ratio of titanium, cerium and manganese in terms of their oxides was 75:10:15. 100 g of the composite oxide thus obtained was immersed in 36.4 g of an aqueous solution of ruthenium nitrate (ruthenium concentration: 3.9% by mass) as a water-soluble ruthenium salt, and the immersed composite oxide was dried for 24 hours at 90°C and calcined for 3 hours at 300°C. Thus, a catalyst having ruthenium supported on the composite oxide was obtained. The amount of supported ruthenium was 1.4% by mass.

The waste water subjected to the treatment was aqueous ammonia, and the waste water was fed under pressure by waste water supply pump 32 through waste water supply line 31 at a flow rate of 1 liter/hr. On the other hand, air that had been pressurized in a compressor was supplied through oxidizing agent supply line 33. This gas-liquid mixture was heated in heat exchanger 34, and then the mixture was introduced into the column reactor 35 packed with a catalyst 35.1, and was subjected to the wet oxidation treatment at a treatment temperature of 250°C. The liquid to be treated was cooled by heat exchanger 34' and cooler 36, and then was introduced into gas-liquid separator 37. In the gas-liquid separator 37, the liquid surface was detected by a liquid surface controller (LC), and a constant liquid surface was retained by operating liquid surface control valve 38. At the same time, the pressure was detected by a pressure controller (PC), and the apparatus was operated so as to retain a pressure of 7.0 MPa (gauge) by operating pressure control valve 39. The ammonia concentration and the amount of air supplied were varied with the lapse of the treatment time. The treatment conditions are presented in Table 9.

The treatment results were as shown in Table 10.

**[Table 9]**

| Example 3-1 | Elapsed treatment time (hr) | 0-300 | 300-600 | 600-900 | 900-1200 |
|---|---|---|---|---|---|
| | Ammoniacal nitrogen concentration (g/L) | 4.0 | 2.2 | 2.2 | 4.0 |
| | Amount of air supplied (L(N)/h) | 25.1 | 25.1 | 50.3 | 25.1 |
| | Theoretical oxygen demand (g/L) | 6.9 | 3.8 | 3.8 | 6.9 |
| | Amount of oxygen supplied/theoretic al oxygen demand (times) | 1.1 | 2.0 | 4.0 | 1.1 |

**[Table 10]**

| | Elapsed time (hr) | 300 | 600 | 900 | 1200 |
|---|---|---|---|---|---|
| Example 3-1 | Total nitrogen treatment efficiency (%) | 98.1 | 97.3 | 88.5 | 98.1 |
| | Amount of residual ammoniacal nitrogen (mg/L) | 28 | 8 | 0 | 32 |
| | Amount of nitrate nitrogen produced (mg/L) | 36 | 47 | 238 | 33 |
| | Amount of nitrite nitrogen produced (mg/L) | 11 | 4 | 16 | 10 |

### (Example 3-2)

The catalyst indicated in Table 11 was used, and the same waste water as that used in Example 3-1 was treated under the same treatment conditions as those used in Example 3-1. The treatment results were as shown in Table 12. The method for preparing the catalyst was a method including supporting a metal to be supported, on the composite oxide obtained by co-precipitation method in the same manner as in Example 3-1, according to the same procedure as that used in Example 3-1.

**[Table 11]**

| | Catalyst | | | Remarks |
|---|---|---|---|---|
| | Base material component | Metal supported | Amount of support | |
| Example 3-2 | Fe₂O₃-CeO₂-ZnO | Pt | 0.9 mass% | Supported by impregnation |

**[Table 12]**

| Elapsed time (hr) | | 300 | 600 | 900 | 1200 |
|---|---|---|---|---|---|
| Total nitrogen treatment efficiency (%) | Example 3-3 | 99.1 | 97.2 | 88.8 | 98.9 |
| Amount of residual ammoniacal nitrogen (mg/L) | Example 3-3 | 10 | 0 | 0 | 13 |
| Amount of nitrate nitrogen produced (mg/L) | Example 3-3 | 23 | 61 | 247 | 30 |
| Amount of nitrite nitrogen produced (mg/L) | Example 3-3 | 5 | 0 | 0 | 3 |

### (Examples 3-3 (not according to the invention) to 3-4)

The treatment of ammonia and monoethanolamine was carried out using the respective catalysts indicated in Table 13. The treatment was continuously carried out for 900 hours . The waste water was fed under pressure by waste water supply pump 32 through waste water supply line 31 at a flow rate of 2 liters/hr. On the other hand, air that had been pressurized in a compressor was supplied through oxidizing agent supply line 33. The concentrations of ammonia and monoethanolamine, and the amount of air supplied were varied with the lapse of the treatment time, and for other treatment conditions, the same conditions as those used in Example 3-1 were employed. The treatment conditions are presented in Table 14. The method for preparing the catalyst was a method including supporting a metal to be supported, on the composite oxide obtained by co-precipitation method in the same manner as in Example 3-1, according to the same procedure as that used in Example 3-1.

The treatment results were as shown in Table 15.

**[Table 13]**

| | Catalyst | | | Remarks |
|---|---|---|---|---|
| | Base material component | Metal supporte d | Amount of support | |
| Example 3-3 | CeO₂-ZrO₂-La₂O₃-Y₂O₃ | Pd | 1.2 mass% | Supported by impregnation |
| Example 3-4 | Fe₂O₃-In₂O₃-TiO₂ | Rh | 0.5 mass% | Supported by |

**[Table 14]**

| Elapsed treatment time (hr) | 0-300 | 300-600 | 600-900 |
|---|---|---|---|
| Ammonia concentration (NH⁴⁺) (g/L) | 3.9 | 2.3 | 3.9 |
| MEA concentration (g/L) | 2.2 | 1.1 | 2.2 |
| Total nitrogen concentration (g/L) | 3.5 | 2.0 | 3.5 |
| Amount of air supplied (L(N) /h) | 65.3 | 65.3 | 65.3 |
| Theoretical oxygen demand (g/L) | 8.9 | 4.9 | 8.9 |
| Amount of oxygen supplied/theoretical oxygen demand (times) | 1.1 | 2.0 | 1.1 |

**[Table 15]**

| Elapsed time (hr) | | 300 | 600 | 900 |
|---|---|---|---|---|
| Total nitrogen treatment efficiency (%) | Example 3-3 | 96.5 | 96.0 | 96.3 |
| | Example 3-4 | 98.7 | 98.2 | 98.7 |
| Residual ratio of ammoniacal nitrogen (mg/L) | Example 3-3 | 103 | 19 | 110 |
| | Example 3-4 | 39 | 28 | 35 |
| Amount of nitrate nitrogen produced (mg/L) | Example 3-3 | 9 | 50 | 12 |
| | Example 3-4 | 5 | 7 | 7 |
| Amount of nitrite nitrogen produced (mg/L) | Example 3-3 | 10 | 12 | 8 |
| | Example 3-4 | 3 | 2 | 4 |

### (Comparative Examples 3-1 to 3-2)

The catalysts indicated in Table 16 were used, and the same waste water as that used in Example 3-1 was treated under the same treatment conditions as those used in Example 3-1. The treatment results were as shown in Table 17. The catalysts of the Comparative Examples were catalysts obtained by supporting an aqueous solution containing a waster-soluble salt of the metal to be supported as a precursor, on the base material indicated in Table 16 according to impregnation method.

**[Table 16]**

| | Catalyst | | | Remarks |
|---|---|---|---|---|
| | Base material component | Metal supported | Amount of support | |
| Comparative Example 3-1 | TiO₂ | Ir | 0.8 mass% | Supported by impregnation |
| Comparative Example 3-2 | Fe₂O₃ | Pt | 1.2 mass% | Supported by impregnation |

**[Table 17]**

| Elapsed time (hr) | | 300 | 600 | 900 | 1200 |
|---|---|---|---|---|---|
| Total nitrogen treatment efficiency (%) | Comparative Example 3-1 | 94.5 | 74.0 | 64.6 | 94.9 |
| | Comparative Example 3-2 | 95.2 | 75.2 | 67.6 | 90.6 |
| Amount of residual ammoniacal nitrogen (mg/L) | Comparative Example 3-1 | 58 | 38 | 0 | 70 |
| | Comparative Example 3-2 | 15 | 6 | 0 | 226 |
| Amount of nitrate nitrogen produced (mg/L) | Comparative Example 3-1 | 129 | 469 | 708 | 114 |
| | Comparative Example 3-2 | 156 | 507 | 675 | 121 |
| Amount of nitrite nitrogen produced (mg/L) | Comparative Example 3-1 | 33 | 64 | 70 | 19 |
| | Comparative Example 3-2 | 21 | 33 | 37 | 29 |

### (Comparative Examples 3-3 to 3-4)

The catalysts indicated in Table 18 were used, and the same waste water as that used in Examples 3-3 and 3-4 was treated under the same treatment conditions as those used in Examples 3-3 and 3-4. The treatment results were as shown in Table 19. The catalysts of the Comparative Examples were catalysts obtained by supporting an aqueous solution containing a waster-soluble salt of the metal to be supported as a precursor, on the base material indicated in Table 18 according to impregnation method.

**[Table 18]**

| | Catalyst | | | Remarks |
|---|---|---|---|---|
| | Base material component | Metal supported | Amount of support | |
| Comparative Example 3-3 | MnO₂ | Rh | 0.7 mass% | Supported by impregnation |
| Comparative Example 3-4 | TiO₂ | Ru | 1.0 mass% | Supported by impregnation |

**[Table 19]**

| Elapsed time (hr) | | 300 | 600 | 900 |
|---|---|---|---|---|
| Total nitrogen treatment efficiency (%) | Comparative Example 3-3 | 91.3 | 68.1 | 89.0 |
| | Comparative Example 3-4 | 92.0 | 74.0 | 91.8 |
| Amount of residual ammoniacal nitrogen (mg/L) | Comparative Example 3-3 | 90 | 14 | 173 |
| | Comparative Example 3-4 | 143 | 54 | 150 |
| Amount of nitrate nitrogen produced (mg/L) | Comparative Example 3-3 | 181 | 569 | 190 |
| | Comparative Example 3-4 | 108 | 388 | 99 |
| Amount of nitrite nitrogen produced mg/L) | Comparative Example 3-3 | 34 | 55 | 22 |
| | Comparative Example 3-4 | 29 | 78 | 37 |

### (Example 4-1- not according to the invention)

Ruthenium (Ru) (1.3% by mass) and zirconium oxide (ZrO₂) (3.5% by mass) were supported by impregnation on titanium oxide (TiO₂). Ruthenium (Ru) nitrate and zirconium nitrate were used as precursors. The catalyst obtained after the supporting by impregnation was calcined for 3 hours at 300°C in air, and was subjected to hydrogen reduction in a gas mixture of hydrogen and nitrogen (hydrogen: 5% by volume) for 3 hours at the same temperature. Thus, a catalyst was obtained. The composition of the catalyst thus obtained is indicated in Table 20.

### (Example 4-2)

Palladium (Pd) (0.8% by mass) and cerium oxide (CeO₂) (5.5% by mass) were supported by impregnation on a composite oxide of iron oxide (Fe₂O₃) and bismuth oxide (Bi₂O₃) [mass ratio of iron oxide:bismuth oxide = 85:15] prepared by co-precipitation method. Palladium nitrate and cerium nitrate were used as precursors. The catalyst obtained after the supporting by impregnation was calcined for 4 hours at 400°C in air, and was subjected to hydrogen reduction in a gas mixture of hydrogen and nitrogen (hydrogen: 5% by volume) for 3 hours at 300°C. Thus, a catalyst was obtained. The composition of the catalyst thus obtained is indicated in Table 20.

### (Comparative Example 4-1)

Iridium (Ir) (1.5% by mass) was supported by impregnation on aluminum oxide (Al₂O₃). An iridium nitrate solution was used as a precursor. The catalyst obtained after the supporting by impregnation was calcined for 3 hours at 400°C in air, and was subjected to hydrogen reduction in a gas mixture of hydrogen and nitrogen (hydrogen: 5% by volume) for 2 hours at 300°C. Thus, a catalyst was obtained. The composition of the catalyst thus obtained is indicated in Table 21.

### (Comparative Example 4-2)

Platinum (Pt) (1.0% by mass) was supported by impregnation on iron oxide (Fe₂O₃). A dinitrodiammine platinum nitrate solution was used as a precursor. The catalyst obtained after the supporting by impregnation was subjected to hydrogen reduction in a gas mixture of hydrogen and nitrogen (hydrogen: 5% by volume) for 3 hours at 300°C, and thus the catalyst was obtained. The composition of the catalyst thus obtained is indicated in Table 21.

### (Waste water treatment method 1)

A treatment apparatus such as shown in FIG. 4 was used, the column reactor 35 was packed with 1 liter each of the catalysts obtained in Examples 4-1 and 4-2 and Comparative Examples 4-1 and 4-2, and the treatment was continuously carried out for 1200 hours under the treatment conditions described below. The experiment method and results will be described in detail below. The waste water subjected to the treatment was aqueous ammonia, and the waste water was fed under pressure by waste water supply pump 32 through waste water supply line 31 at a flow rate of 1 liter/hr. On the other hand, air that had been pressurized in a compressor was supplied through oxidizing agent supply line 33. This gas-liquid mixture was heated in heat exchanger 34, and then the mixture was introduced into the column reactor 35 packed with a catalyst 35.1, and was subjected to a wet oxidation treatment at a treatment temperature of 250°C. The liquid to be treated was cooled by heat exchanger 34' and cooler 36, and then was introduced into gas-liquid separator 37. In the gas-liquid separator 37, the liquid surface was detected by a liquid surface controller (LC), and a constant liquid surface was retained by operating liquid surface control valve 38. At the same time, the pressure was detected by a pressure controller (PC), and the apparatus was operated so as to retain a pressure of 7.0 MPa (gauge) by operating pressure control valve 39. The ammonia concentration and the amount of air supplied were varied with the lapse of the treatment time. The treatment conditions are presented in Table 22. The treatment results were as shown in Table 23 and Table 24.

### (Example 4-3 - not according to the invention)

Platinum (Pt) and lanthanum oxide (La₂O₃) were supported by impregnation on a composite oxide of cerium oxide (CeO₂) and indium oxide (In₂O₃) prepared by co-precipitation method. A dinitrodiammine platinum nitrate solution and lanthanum nitrate were used as precursors. The catalyst obtained after the supporting by impregnation was calcined at 500°C in air, and was subjected to hydrogen reduction at 300°C. Thus, the catalyst was obtained. The composition of the catalyst thus obtained is indicated in Table 25.

### (Comparative Example 4-3)

Ruthenium (Ru) and lanthanum oxide (La₂O₃) were supported by impregnation on a commercially available silica alumina. Ruthenium nitrate and lanthanum nitrate were used as precursors. The catalyst obtained after the supporting by impregnation was subjected to hydrogen reduction at 300°C, and thus the catalyst was obtained. The composition of the catalyst thus obtained is indicated in Table 25.

### (Waste water treatment method 2)

A treatment apparatus such as shown in FIG. 4 was used, the column reactor 35 was packed with 1 liter each of the catalysts obtained in Example 4-3 and Comparative Example 4-3, and the treatment was continuously carried out for 900 hours under the treatment conditions described below. The experiment method and results will be described in detail below. The waste water subjected to the treatment was aqueous ammonia and monoethanolamine, and the waste water was fed under pressure by waste water supply pump 32 through waste water supply line 31 at a flow rate of 2 liters/hr. On the other hand, air that had been pressurized in a compressor was supplied through oxidizing agent supply line 33. This gas-liquid mixture was heated in a heat exchanger 34, and then the mixture was introduced into the column reactor 35 packed with a catalyst 35.1, and was subjected to a wet oxidation treatment at a treatment temperature of 250°C. The liquid to be treated was cooled by heat exchanger 34' and cooler 36, and then was introduced into gas-liquid separator 37. In the gas-liquid separator 37, the liquid surface was detected by a liquid surface controller (LC), and a constant liquid surface was retained by operating liquid surface control valve 38. At the same time, the pressure was detected by a pressure controller (PC), and the apparatus was operated so as to retain a pressure of 7.0 MPa (gauge) by operating pressure control valve 39. The concentrations of ammonia and monoethanolamine were varied with the lapse of the treatment time. The treatment conditions are presented in Table 26. The treatment results were as shown in Table 27.

**[Table 20]**

| | Catalyst | | | Remarks |
|---|---|---|---|---|
| | Base material component | Metal supported | Amount supported | |
| Example 4-1 | TiO₂ | Ru-ZrO₂ | 1.3 mass%(Ru) 3.5 mass% (ZrO₂) | Supported by impregnation |
| Example 4-2 | Fe₂O₃-Bi₂O₃ | Pd-CeO₂ | 0.8 mass%(Pd) 5.5 mass% (CeO₂) | Supported by impregnation |

**[Table 21]**

| | Catalyst | | | Remarks |
|---|---|---|---|---|
| | Base material component | Metal supported | Amount supported | |
| Comparative Example 4-1 | Al₂O₃ | Ir | 1.5 mass% | Supported by impregnation |
| Comparative Example 4-2 | Fe₂O₃ | Pt | 1.0 mass% | Supported by impregnation * No calcination in air |

**[Table 22]**

| Elapsed treatment time | hr | 0-300 | 300-600 | 600-900 | 900-1200 |
|---|---|---|---|---|---|
| Ammoniacal nitrogen concentration | g/L | 4.0 | 2.2 | 2.2 | 4.0 |
| Amount of air supplied | L(N)/h | 25.1 | 25.1 | 50.3 | 25.1 |
| Theoretical oxygen demand | g/L | 6.9 | 3.8 | 3.8 | 6.9 |
| Amount of oxygen supplied/theoretic al oxygen demand | times | 1.1 | 2.0 | 4.0 | 1.1 |

**[Table 23]**

| Elapsed time (hr) | | 300 | 600 | 900 | 1200 |
|---|---|---|---|---|---|
| Total nitrogen treatment efficiency (%) | Example 4-1 | 98.5 | 97.2 | 93.7 | 98.4 |
| | Example 4-2 | 98.8 | 98.8 | 92.1 | 98.6 |
| Amount of residual ammoniacal nitrogen (mg/L) | Example 4-1 | 14 | 7 | 0 | 17 |
| | Example 4-2 | 25 | 8 | 0 | 22 |
| Amount of nitrate nitrogen produced (mg/L) | Example 4-1 | 45 | 53 | 133 | 40 |
| | Example 4-2 | 11 | 13 | 171 | 16 |
| Amount of nitrite nitrogen produced (mg/L) | Example 4-1 | 2 | 2 | 5 | 8 |
| | Example 4-2 | 12 | 5 | 3 | 17 |

**[Table 24]**

| Elapsed time (hr) | | 300 | 600 | 900 | 1200 |
|---|---|---|---|---|---|
| Total nitrogen treatment efficiency (%) | Comparative Example 4-1 | 94.5 | 74.0 | 64.6 | 94.9 |
| | Comparative Example 4-2 | 95.2 | 75.2 | 67.6 | 90.6 |
| Amount of residual ammoniacal nitrogen (mg/L) | Comparative Example 4-1 | 58 | 38 | 0 | 70 |
| | Comparative Example 4-2 | 15 | 6 | 0 | 226 |
| Amount of nitrate nitrogen produced (mg/L) | Comparative Example 4-1 | 129 | 469 | 708 | 114 |
| | Comparative Example 4-2 | 156 | 507 | 675 | 121 |
| Amount of nitrite nitrogen produced (mg/L) | Comparative Example 4-1 | 33 | 64 | 70 | 19 |
| | Comparative Example 4-2 | 21 | 33 | 37 | 29 |

**[Table 25]**

| | Catalyst | | | Remarks |
|---|---|---|---|---|
| | Base material component | Metal supported | Amount supported | |
| Example 4-3 | CeO₂-In₂O₃ | Pt-La₂O₃ | 1.0 mass% (Pt) | Supported by impregnation |
| | | | 5.0 mass% (La₂O₃) | |
| Comparative Example 4-3 | SiO₂-Al₂O₃ | Ru-La₂O₃ | 1.6 mass% (Ru) | Supported by impregnation * No calcination in air |
| | | | 4.0 mass% (La₂O₃) | |

**[Table 26]**

| Elapsed treatment time | hr | 0-300 | 300-600 | 600-900 |
|---|---|---|---|---|
| Ammonia concentration (NH⁴⁺) | g/L | 3.9 | 2.3 | 3.9 |
| MEA concentration | g/L | 2.2 | 1.1 | 2.2 |
| Total nitrogen concentration | g/L | 3.5 | 2.0 | 3.5 |
| Amount of air supplied | L(N)/h | 65.3 | 65.3 | 65.3 |
| Theoretical oxygen demand | g/L | 8.9 | 4.9 | 8.9 |
| Amount of oxygen supplied/theoretical oxygen demand | times | 1.1 | 2.0 | 1.1 |

**[Table 27]**

| Elapsed time (hr) | | 300 | 600 | 900 |
|---|---|---|---|---|
| Total nitrogen treatment efficiency (%) | Example 4-3 | 96.5 | 96.0 | 96.3 |
| | Comparative Example 4-3 | 92.0 | 74.0 | 85.2 |
| Amount of residual ammoniacal nitrogen (mg/L) | Example 4-3 | 103 | 19 | 110 |
| | Comparative Example 4-3 | 143 | 54 | 421 |
| Amount of nitrate nitrogen produced (mg/L) | Example 4-3 | 9 | 50 | 12 |
| | Comparative Example 4-3 | 108 | 388 | 70 |
| Amount of nitrite nitrogen produced (mg/L) | Example 4-3 | 10 | 12 | 8 |
| | Comparative Example 4-3 | 29 | 78 | 26 |

### (Example 5-1- not according to the invention)

A treatment apparatus such as shown in FIG. 2 was used, the column reactor 25 was packed with 1.2 liters of the catalysts described below, and the treatment was continuously carried out for 1000 hours under the treatment conditions described below. The experiment method and results will be described in detail below. Here, two kinds of catalysts were used, and the catalyst on the upstream side in the flow direction of the waste water was installed as a pre-catalyst, while the catalyst on the downstream side was installed as a post-catalyst.

As the pre-catalyst, 1 liter of a catalyst prepared by supporting by impregnation 1.3% by mass of ruthenium and 3.5% by mass of zirconium oxide on a base material formed from titanium oxide, was used. Ruthenium nitrate and zirconium nitrate were used as precursors. The catalyst was obtained by performing hydrogen reduction for 3 hours at 300°C in a gas mixture of hydrogen and nitrogen (hydrogen: 5% by volume) at the same temperature.

As the post-catalyst, 0.2 liters of a catalyst which used titanium oxide as a main component of the base material and contained 0.4% by mass of platinum, was used.

The COD (Cr) concentration of the waste water subjected to the treatment was 24 g/liter, the monoethanolamine was 17.6 g/liter, and the total nitrogen concentration was 4 g/liter.

The waste water was fed under pressure by a waste water supply pump 22 through a waste water supply line 21 at a flow rate of 1 liter/hr. On the other hand, air that had been pressurized in a compressor was supplied through oxidizing agent supply line 23 at a flow rate of 110 liters (N: standard state)/hr. This gas-liquid mixture was heated in heat exchanger 24, and then the mixture was introduced into the column reactor 25 packed with the catalysts, and was subjected to the wet oxidation treatment at treatment temperature of 240°C. The liquid to be treated was cooled by the heat exchanger 24 and cooler 26, and then was introduced into gas-liquid separator 27. In the gas-liquid separator 27, the liquid surface was detected by a liquid surface controller (LC), and a constant liquid surface was retained by operating liquid surface control valve 28. At the same time, the pressure was detected by a pressure controller (PC), and the apparatus was operated so as to retain a pressure of 7.0 MPa (gauge) by operating pressure control valve 29.

The COD (Cr) concentration of the treated liquid which was obtained after 50 hours was 27 mg/liter, and the total nitrogen concentration was 47 mg/liter. Thereafter, the treatment was continued from the start to 1000 hours past, but decrease in the treatment performance was not recognized particularly. The COD (Cr) concentration of the treated liquid after a lapse of 1000 hours was 52 mg/liter, and the total nitrogen concentration was 66 mg/liter.

### (Example 5-2)

A treatment apparatus such as shown in FIG. 2 was used, its column reactor 25 was packed with 1.2 liters of the catalysts described below, and a treatment was continuously carried out for 1000 hours under the treatment conditions described below. The experiment method and results will be described in detail below. Here, two kinds of catalysts were used, and the catalyst on the upstream side in the flow direction of the waste water was installed as a pre-catalyst, while the catalyst on the downstream side was installed as a post-catalyst.

As the pre-catalyst, 1 liter of a catalyst prepared by supporting by impregnation 0.9% by mass of palladium on a base material formed from oxides of cerium, zirconium and iron (mass ratio of cerium oxide:zirconium oxide:iron oxide = 7:25:68) was used. Palladium nitrate was used as a precursor. The catalyst was obtained by performing hydrogen reduction for 2 hours at 300°C in a gas mixture of hydrogen and nitrogen (hydrogen: 5% by volume).

As the post-catalyst, 0.2 liters of a catalyst containing 0.4% by mass of platinum on a base material formed from oxides of iron and titanium (mass ratio of iron oxide:titanium oxide = 85:15) was used.

The COD (Cr) concentration of the waste water subjected to the treatment was 24 g/liter, N-methylpyrrolidone was 13.8 g/liter, and the total nitrogen concentration was 2 g/liter.

The waste water was fed under pressure by waste water supply pump 22 through waste water supply line 21 at a flow rate of 0.8 liters/hr. On the other hand, air that had been pressurized in a compressor was supplied through oxidizing agent supply line 23 at a flow rate of 90 liters (N: standard state)/hr. This gas-liquid mixture was heated in heat exchanger 24, and then the mixture was introduced into the column reactor 25 packed with the catalysts, and was subjected to the wet oxidation treatment at a treatment temperature of 240°C. The liquid to be treated was cooled by the heat exchanger 24 and cooler 26, and then was introduced into gas-liquid separator 27. In the gas-liquid separator 27, the liquid surface was detected by a liquid surface controller (LC), and a constant liquid surface was retained by operating liquid surface control valve 28. At the same time, the pressure was detected by a pressure controller (PC), and the apparatus was operated so as to retain a pressure of 7.0 MPa (gauge) by operating pressure control valve 29.

The COD (Cr) concentration of the treated liquid which was obtained after 50 hours was 72 mg/liter, and the total nitrogen concentration was 94 mg/liter. Thereafter, the treatment was continued from the start to 1000 hours past, but decrease in the treatment performance was not recognized particularly. The COD (Cr) concentration of the treated liquid after a lapse of 1000 hours was 82 mg/liter, and the total nitrogen concentration was 98 mg/liter.

### Industrial Applicability

The present invention can be used in the treatment of waste water. Particularly, the present invention is effective in the treatment of industrial waste water and a waste water containing nitrogen compounds and the like, and in the wet oxidation treatment of nitrogen-containing compounds in waste water.

### Reference Signs List

- 1: COLUMN REACTOR
- 2: ELECTRIC HEATER
- 3: HEATER
- 4: COOLER
- 5: WASTE WATER SUPPLY PUMP
- 6: WASTE WATER SUPPLY LINE
- 7: ALKALI SUPPLY PUMP
- 8: ALKALI SUPPLY LINE
- 9: COMPRESSOR
- 10: OXYGEN-CONTAINING GAS SUPPLY LINE
- 11: OXYGEN-CONTAINING GAS FLOW RATE CONTROL VALVE
- 12: TREATED LIQUID LINE
- 13: GAS-LIQUID SEPARATOR
- 14: PRESSURE CONTROL VALVE
- 15: LIQUID SURFACE CONTROL VALVE
- 16: GAS DISCHARGE LINE
- 17: TREATED LIQUID DISCHARGE LINE
- 21: WASTE WATER SUPPLY LINE
- 22: WASTE WATER SUPPLY PUMP
- 23: OXIDIZING AGENT SUPPLY LINE
- 24: HEAT EXCHANGER
- 25: REACTION AND THE LIKE
- 25.1: PRE-CATALYST
- 25.2: POST-CATALYST
- 26: COOLER
- 27: GAS-LIQUID SEPARATOR
- 28: LIQUID SURFACE CONTROL VALVE
- 29: PRESSURE CONTROL VALVE
- 31: WASTE WATER SUPPLY LINE
- 32: WASTE WATER SUPPLY PUMP
- 33: OXIDIZING AGENT SUPPLY LINE
- 34, 34': HEAT EXCHANGER
- 35: COLUMN REACTOR
- 35.1: CATALYST
- 36: HEAT EXCHANGER
- 37: GAS-LIQUID SEPARATOR
- 38: LIQUID SURFACE CONTROL VALVE
- 39: PRESSURE CONTROL VALVE

## Claims

1. A catalyst for waste water treatment, having an average particle size of 2mm or greater, comprising, as a component A, iron oxide and a second oxide of at least one element selected from the group consisting of titanium, silicon, aluminum, zirconium and cerium, and as a component B, at least one element selected from the group consisting of silver, gold, platinum, palladium, rhodium, ruthenium and iridium;
wherein the mixing ratio of the iron oxide to the second oxide in component A is 60-95: 40-5, by mass;
wherein at least 70% by mass of the component B, determined by linear analysis with EPMA (electron probe microanalysis; using an EPM-810, Shimadzu Corp., with 1µm X-ray beam diameter, accelerating voltage of 20kV, sample current 0.1µA and sample scan speed of 200µm/min) and calculation on the basis of the area ratio, is present within 1000 µm from the outer surface of the oxide of the component A,
wherein the average particle size of the component B, calculated by measuring the amount of chemisorption by the CO pulse method of a TPD analysis, is 0.5 nm to 20 nm, and wherein the solid acid content of the oxide of the component A, determined by a temperature programmed desorption method with ammonia adsorption, is 0.20 mmol/g or greater.

2. A catalyst for waste water treatment according to claim 1, comprising 95% to 99.95% by mass of the component A, and 0.05% to 5% by mass of the component B (the sum of the component A and the component B is 100% by mass),
wherein the component A contains 4.95% to 95% by mass of iron as an oxide, and 4.95% to 95% by mass of at least one element selected from the group consisting of titanium, silicon, aluminum, zirconium and cerium, as an oxide (provided that the sum of the oxide of iron and the oxide of the at least one element selected from the group consisting of titanium, silicon, aluminum, zirconium and cerium is 95% to 99.95% by mass with respect to the catalyst).

3. A catalyst for waste water treatment according to claim 1 or 2, comprising the component B in an amount of 0.05% to 0.7% by mass.

## Patentansprüche

1. Katalysator zur Abwasserverarbeitung mit einer durchschnittlichen Partikelgröße von 2 mm oder größer, umfassend als Komponente A Eisenoxid und ein zweites Oxid von mindestens einem Element ausgewählt aus der Gruppe bestehend aus Titan, Silicium, Aluminium, Zirconium und Cer, und als Komponente B mindestens ein Element ausgewählt aus der Gruppe bestehend aus Silber, Gold, Platin, Palladium, Rhodium, Ruthenium und Iridium;
wobei das Mischungsverhältnis des Eisenoxids zu dem zweiten Oxid in Komponente A, bezogen auf die Masse, 60-95:40-5 ist;
wobei mindestens 70 Massen% der Komponente B, bestimmt gemäß Linearanalyse mit EPMA (Elektronensondenmikroanalyse; unter Verwendung eines EPM-810, Shimadzu Corp., mit 1 µm Röntgenstrahldurchmesser, Beschleunigungsspannung von 20 kV, Abtaststrom von 0,1 µA und Abtastscangeschwindigkeit von 200 µm/min) und Berechnung auf Basis des Flächenverhältnisses, innerhalb von 1000 µm von der Außenoberfläche des Oxids der Komponente A vorliegen,
wobei die durchschnittliche Partikelgröße der Komponente B, berechnet durch Messen des Betrags der Chemisorption nach der CO-Pulsmethode einer TPD-Analyse, 0,5 nm bis 20 nm beträgt, und
wobei der feste Säuregehalt des Oxids der Komponente A, bestimmt nach einer temperaturprogrammierten Desorptionsmethode mit Ammoniakadsorption, 0,20 mmol/g oder mehr beträgt.

2. Katalysator zur Abwasserverarbeitung nach Anspruch 1, umfassend 95 Massen% bis 99,95 Massen% der Komponente A und 0,05 Massen% bis 5 Massen% der Komponente B (wobei die Summe der Komponente A und der Komponente B 100 Massen% ergibt),
wobei die Komponente A 4,95 Massen% bis 95 Massen% Eisen als Oxid und 4,95 Massen% bis 95 Massen% von mindestens einem Element ausgewählt aus der Gruppe bestehend aus Titan, Silicium, Aluminium, Zirconium und Cer als Oxid enthält (mit der Maßgabe, dass die Summe des Oxids von Eisen und des Oxids des mindestens einen Elements ausgewählt aus der Gruppe bestehend aus Titan, Silicium, Aluminium, Zirconium und Cer 95 Massen% bis 99,95 Massen% beträgt, bezogen auf den Katalysator).

3. Katalysator zur Abwasserverarbeitung nach Anspruch 1 oder 2, umfassend die Komponente B in einer Menge von 0,05 Massen% bis 0,7 Massen%.

## Revendications

1. Catalyseur pour le traitement d'eau résiduaire, ayant une taille moyenne des particules supérieure ou égale à 2 mm, comprenant, en tant que constituant A, de l'oxyde de fer et un second oxyde d'au moins un élément choisi dans le groupe constitué par le titane, le silicium, l'aluminium, le zirconium et le cérium et, en tant que constituant B, au moins un élément choisi dans le groupe constitué par l'argent, l'or, le platine, le palladium, le rhodium, le ruthénium et l'iridium ;
dans lequel le rapport de mélange de l'oxyde de fer au second oxyde dans le constituant A est de 60-95:40-5, en masse ;
dans lequel au moins 70 % en masse du constituant B, déterminé par analyse linéaire avec l'EPMA (la microanalyse par sonde électronique ; à l'aide d'un appareil EPM-810 de Shimadzu Corp., avec un diamètre de faisceau de rayons X de 1 µm, une tension d'accélération de 20 kV, un courant d'échantillon de 0,1 µA et une vitesse de balayage d'échantillon de 200 µm/min) et calcul sur la base du rapport des surfaces, est présent à moins de 1000 µm de la surface externe de l'oxyde du constituant A,
dans lequel la taille moyenne des particules du constituant B, calculée par la mesure de la hauteur de la chimisorption par la méthode d'impulsions de CO d'une analyse de TPD, est de 0,5 nm à 20 nm et
dans lequel la teneur en acides solides de l'oxyde du constituant A, déterminée par une méthode de désorption à température programmée avec adsorption d'ammoniac, est supérieure ou égale à 0,20 mmol/g.

2. Catalyseur pour le traitement d'eau résiduaire selon la revendication 1, comprenant 95 % à 99,95 % en masse du constituant A et 0,05 % à 5 % en masse du constituant B (la somme du constituant A et du constituant B est de 100 % en masse),
dans lequel le constituant A contient 4,95 % à 95 % en masse de fer sous forme d'un oxyde et 4,95 % à 95 % en masse d'au moins un élément choisi dans le groupe constitué par le titane, le silicium, l'aluminium, le zirconium et le cérium, sous forme d'un oxyde (à condition que la somme de l'oxyde de fer et de l'oxyde de l'au moins un élément choisi dans le groupe constitué par le titane, le silicium, l'aluminium, le zirconium et le cérium soit de 95 % à 99,95 % en masse par rapport au catalyseur).

3. Catalyseur pour le traitement d'eau résiduaire selon la revendication 1 ou 2, comprenant le constituant B en une quantité de 0,05 % à 0,7 % en masse.
